# EUROPÄISCHE PATENTSCHRIFT

(11) **EP 3 875 157 B1**
(45) Veröffentlichungstag und Bekanntmachung des Hinweises auf die Patenterteilung: **12.08.2026**
(21) Anmeldenummer: 21159526.9
(22) Anmeldetag: 26.02.2021
(51) Int. Cl.: A62C 35/68, A62C 37/50, F24F 7/04, F24F 11/00, F24F 11/38

(54) **FERNÜBERWACHUNG EINES ROHRNETZWERKS MITTELS SENSOREN**
REMOTE MONITORING OF A PIPE NETWORK USING SENSORS
SURVEILLANCE À DISTANCE D'UN RÉSEAU DES CONDUITS AU MOYEN DE CAPTEURS

(30) Priorität: 06.03.2020 DE 102020106193
(43) Veröffentlichungstag der Anmeldung: 08.09.2021
(73) Patentinhaber: Minimax Viking Patent Management GmbH, 23840 Bad Oldesloe (DE)
(72) Erfinder: Bechtloff, Volker, 23840 Bad Olddesloe (DE); Böke, Joachim, 23840 Bad Olddesloe (DE)
(74) Vertreter: Eisenführ Speiser

(56) Entgegenhaltungen:
- US-A1- 2014 332 240
- US-A1- 2019 009 119
- US-A1- 2019 224 512
- US-A1- 2019 247 690
- GESELLCHEN ANDRÉ: "Industrie 4.0 und BIM: Chancen und Risiken der Digitalisierung im Brandschutz", FEUERTRUTZ MAGAZIN, 30 September 2016 (2016-09-30), FeuerTrutz Magazin (September 2016), XP093326940, Retrieved from the Internet <URL:https://www.feuertrutz.de/brandschutz-4-0--chancen-und-risiken-der-digitalisierung-14102016> [retrieved on 20251020]

## Beschreibung

Die vorliegende Erfindung betrifft ein System sowie ein Verfahren zum Überwachen eines Rohrnetzwerks für eine Brandschutzanlage.

Unter einer Brandschutzanlage wird hierbei jede Art von Anlage verstanden, die zum Zwecke des Brandschutzes in Gebäuden, Hallen, Räumen oder ähnlichem eingesetzt werden kann. Bei derartigen Brandschutzanlagen kann es sich beispielsweise, aber nicht ausschließlich, um Feuerlöschanlagen, Funkenlöschanlagen, Rauchabzugsanlagen und/oder eine Kombination aus diesen handeln. Bei Brandschutzanlagen im Sinne der Erfindung handelt es sich hierbei insbesondere3 um Anlagen, welche eine Zentralvorrichtung und eines oder mehrere Peripheriegeräte und/oder Komponenten umfassen, die mit der Zentralvorrichtung in kommunikativer Verbindung stehen.

Es ist bekannt, dass Brandschutzanlagen durch entsprechende Vorgaben und/oder Richtlinien beschriebene Vorschriften erfüllen müssen. Diese Vorgaben und/oder Richtlinien verlangen unter anderem regelmäßige Kontrollen der Rohrwandstärke der Rohre des Rohrnetzwerks der Brandschutzanlage, welche der Führung des Löschfluids dienen. Die Kontrolle der Rohrwandstärke erfolgt hierbei, weil es im Laufe der Zeit innerhalb des Rohrnetzwerks zu Korrosion kommen kann und hierdurch die Stärke der Rohrwand abnehmen kann. Wenn dies geschieht, kann es zu Leckage kommen. Im Falle einer Leckage kann jedoch nicht mehr sichergestellt werden, dass das Löschfluid im Brandfall in ausreichender Menge und mit ausreichendem Druck durch das Rohrnetzwerk zu den Löschfluidauslässen geführt wird. Dadurch kann die Schutzbereitschaft der Brandschutzanlage eingeschränkt bzw. nicht mehr vorhanden sein.

Eine weitere durch entsprechende Vorgaben und/oder Richtlinien vorgegebene verlangte Kontrolle ist die Prüfung der Inkrustierung der Rohre des Rohrnetzwerks. Hierbei kann geprüft werden, ob und, wenn ja, an welcher Position innerhalb der Rohre Inkrustierungen, also Ablagerungen, vorliegen. Das bedeutet, dass das Rohrnetzwerk an bestimmten Stellen überwacht wird, wobei anhand der Messungen ermittelt werden kann, wo die Ablagerung möglicherweise lokalisiert ist. Ablagerungen können den Innendurchmesser des Rohres verringern. Dies kann einen Einfluss auf das Durchflussvolumen des Löschfluids in einem bestimmten Zeitintervall durch das Rohr oder die Rohre, welche von Ablagerungen betroffen sind, haben und die Durchflussmenge durch das Rohr insbesondere verringern.

Als Beispiele für solche Vorgaben und/oder Richtlinien sollen die VdS-Richtlinie CEA 4001 sowie die Richtlinie EN 12845 genannt werden. In diesen ist vorgegeben, dass im Falle von Fluidanlagen alle 25 Jahre und im Falle von Trockenanlage nach etwa 12 Jahren die Rohrwandstärke mittels Ultraschall sowie die Inkrustierung mittels endoskopischer Untersuchung geprüft werden soll, um so sicherzugehen, dass eventuell betroffene Rohre gespült werden können, um die Inkrustierungen zu entfernen. Auf diese Weise kann die volle Funktionalität des Rohrnetzwerkes - und damit die Schutzbereitschaft der Brandschutzanlage - gewährleistet werden.

Im Stand der Technik werden diese Kontrollen durch entsprechende Sachverständige durchgeführt. Sie erfordern eine manuelle Messung sowie ein Öffnen des Rohrnetzwerks zur Durchführung der endoskopischen Untersuchung. Daher sind solche Kontrollen oftmals mit hohem Zeitaufwand und hohen Kosten verbunden, wobei in dieser Zeit die Brandschutzanlage nicht wie gewohnt in Betrieb ist.

Ein weiterer Nachteil dieser Messungen nach dem Stand der Technik besteht darin, dass die Messungen nur in relativ großen Zeitabständen durchgeführt werden. Insbesondere erfolgt keine kontinuierliche Messung oder eine Messung in kurzen Zeitintervallen, die einen Rückschluss auf die Entwicklung des Rohrnetzwerkes in Bezug auf Inkrustierung und/oder Korrosion zulassen. Somit kann sich im Stand der Technik die Korrosion und/oder die Inkrustierung oftmals aufbauen, ohne dass diese entdeckt wird, bevor es zur Leckage und/oder zum Verlust des Durchflussvolumens kommt.

Es gibt daher immer wieder Bestrebungen, eine Kontrolle zu entwickeln, die eine kontinuierliche oder quasi-kontinuierliche - also zeitlich kürzer beabstandete - Messung ermöglichen.

In diesem Zusammenhang offenbart die US 2019/0224515 A1 ein Verfahren und ein System zum Messen einer Durchflussrate durch ein Sprinklerrohrnetzwerk mittels Ultraschall. Hierfür werden eines oder mehrere ultraschall-basierte Flussmessgeräte innerhalb der Rohre des Rohrnetzwerks angeordnet, die die Durchflussrate des Löschfluids durch das Rohrnetzwerk überwachen. Hierzu werden die Durchflussraten, die durch mehrere Flussmessgeräte innerhalb eines Rohres ermittelt wurden, miteinander verglichen und bei Abweichung voneinander wird eine Leckage vermutet. Die US 2014/332240 A1 lehrt ein Feuersprinkler-System, welches ein Rohr mit einem ersten Rohrabschnitt und einem zweiten Rohrabschnitt umfasst. Der erste Rohrabschnitt umfasst eine Wand mit einer ersten Wandstärke, und der zweite Rohrabschnitt umfasst eine Wand mit einer zweiten Wandstärke, die größer ist als die erste Wandstärke. Das Feuersprinkler-System umfasst ferner eine Struktur, die mit dem Rohr gekoppelt ist und eine abgedichtete Kammer zwischen der Struktur und mindestens dem ersten Rohrabschnitt bildet, sowie einen Sensor zum Erfassen eines Drucks in der abgedichteten Kammer. Darüber hinaus lehrt die US 2014/332240 A1 eine Reihe beispielhafter Korrosionsüberwachungsgeräte und Verfahren zur Überwachung von Korrosion in Rohrleitungssystemen.

Ferner zeigen die US 2019/0247689 A1, die US 2019/0247690 A1 sowie die US 2019/0247691 A1 ein Brandschutzsystem, in welchem mittels Mikrowellen- oder Radiofrequenz (RF)-Signalen kommuniziert werden kann. Hierzu werden die Rohre des Brandschutzsystems als Wellenleiter verwendet. Mittels dieser Messungen kann unter anderem Korrosion innerhalb der Rohre entdeckt werden, da sich die Signatur des Mikrowellensignals ändert, wenn sich die Eigenschaften des Wellenleiters - also in diesem Fall des Rohres - ändern. Hierbei erfolgt die Ermittlung von möglicher Korrosion auf Basis eines Abgleichs eines Referenzzustands für die Rohre, welcher indikativ für nicht korrodierte Rohre ist, mit dem Ist-Zustand des Rohres. Auf Basis der Signalverarbeitung kann die Korrosion ferner lokalisiert und kategorisiert werden.

Der Nachteil des Standes der Technik liegt hierbei zum einen darin, dass der Stand der Technik kein Verfahren vorsieht, mit dem sowohl Ablagerungen als auch Veränderungen der Rohrwandstärke gleichzeitig ermittelt werden können. Ferner beruhen die aus dem Stand der Technik bekannten Verfahren auf komplexen und schwer auszuwertenden Messungen wie Durchflussmessungen und Wellenleitungseigenschaften eines Wellenleiters. Eine präzise Auswertung dieser Messungen erfordert eine gewisse Expertise, so dass auch hier ein Sachverständiger oder zumindest geschultes Personal zur Ausführung der Kontrolle nötig ist. Ferner ist die Verwendung von Durchflussmessungen nicht nur komplex, sondern im Falle von Löschfluidanlagen auch unnötig aufwendig, da diese Anlagen normalerweise kein bewegtes Wasser führen. Um also eine entsprechende Durchflussmessung vorzunehmen, müsste die Anlage ausgelöst werden, da nur so die einzelnen Rohre des Netzwerks betrachtet werden können. Eine solche Auslösung ist jedoch nicht wünschenswert. Ein weiterer Nachteil ist darin zu sehen, dass der Stand der Technik erfordert, dass die Messung für jedes der Rohre des Rohrnetzwerks durchgeführt werden muss, um so einen möglichst vollumfänglichen Überblick über den Zustand des Rohrnetzwerks zu bekommen. Dies erhöht die Komplexität und den nötigen Arbeitsaufwand noch weiter. Ausgehend hiervon ist also wünschenswert, ein System und ein Verfahren bereitzustellen, welches erlaubt, sowohl Veränderungen der Rohrwandstärke der Rohre als auch Ablagerungen innerhalb der Rohre zu erkennen und insbesondere diese voneinander unterscheiden zu können. Es ist ferner wünschenswert, ein System und ein Verfahren bereitzustellen, dass es erlaubt, diese Messungen kontinuierlich, quasi-kontinuierlich und/oder in geringen Zeitintervallen durchzuführen, um so die Entwicklung der Inkrustierung und/oder der Korrosion zeitlich nachvollziehen zu können und gegebenenfalls Gegenmaßnahmen, insbesondere gegen die Ablagerungen, vornehmen zu können. Es ist außerdem wünschenswert, ein System und ein Verfahren bereitzustellen, bei dem diese Prozesse weitestgehend automatisch durchgeführt werden, um die Anforderungen an den Nutzer (also jede Art von Person, die mit der Brandschutzanlage interagiert, beispielsweise den Betreiber der Anlage, den Errichter der Anlage, eine sachverständige Person, die die Anlage wartet oder überprüft, etc. oder ähnliche Personen) zu reduzieren und zudem Informationen über die Wirksamkeit/Bereitschaft der Löschanlage bereitstellen zu können.

Vor diesem Hintergrund stellt sich die vorliegende Erfindung die Aufgabe, ein System und ein Verfahren zum Überwachen eines Rohrnetzwerkes für eine Brandschutzanlage bereitzustellen, welches die vorstehend genannten Nachteile nicht aufweist. Insbesondere ist es eine Aufgabe der vorliegenden Erfindung, ein System und ein Verfahren bereitzustellen, mittels dem sowohl Ablagerungen innerhalb der Rohre des Rohrnetzwerkes als auch Korrosion der Rohre des Rohrnetzwerkes mit reduziertem Aufwand festgestellt werden können. Es ist eine weitere Aufgabe der Erfindung, ein System und ein Verfahren bereitzustellen, mittels dem die zeitliche Entwicklung der Inkrustierung und der Korrosion nachvollzogen werden kann, um so entsprechende Gegenmaßnahmen einzuleiten, bevor ein Austausch der Rohre des Rohrnetzwerks nötig wird.

Diese Aufgabe wird erfindungsgemäß durch ein System zum Überwachen eines Rohrnetzwerks für eine Brandschutzanlage nach Anspruch 1 gelöst.

Unter einem Rohrnetzwerk wird insbesondere ein Netzwerk aus einer Vielzahl von Rohren verstanden, welches der Führung eines Löschfluids dient. Noch weiter bevorzugt wird unter einem Rohrnetzwerk eine Anordnung aus einer Vielzahl von Rohren verstanden, welche der Führung eines flüssigen Löschfluids, wie Wasser und/oder Wasser mit Zusätzen, oder ähnlichem, dient. Das Rohrnetzwerk verfügt bevorzugt über eine Vielzahl von Löschfluidauslässen, aus denen das Löschfluid im Brandfall austreten kann, wenn die Brandschutzanlage auslöst.

Unter einem Sensor wird vorliegend ein Sensor verstanden, der in der Lage ist, Objekte berührungslos zu erkennen. Besonders bevorzugt ist eine Ausgestaltung des Sensors als Abstandssensor. Hierzu kann der Sensor auf unterschiedliche Weise ausgestaltet werden. In einigen Ausführungsformen kann der Sensor bevorzugt als Schallsensor, insbesondere als Ultraschallsensor, ausgeführt werden. Der Sensor kann jedoch auch mit anderen Arten von Wellen, insbesondere Longitudinalwellen, arbeiten. In einigen Ausführungsformen kann der Sensor beispielsweise auch mit Radiowellen, Mikrowellen, Radarwellen und ähnlichem arbeiten.

Um Inkrustierungen/Korrosion messen zu können, wird der Sensor zunächst für das jeweilige Rohr "geeicht". Dazu wird zunächst ein Sollwert ermittelt oder festgelegt, also ein Wert, der angibt, wie das Rohr ohne Inkrustierung und/oder Korrosion auszusehen hat. Zur Ermittlung dieses Sollwerts kann beispielsweise der Abstand zwischen Sensor und Rohrinnenwand, insbesondere der Abstand zwischen Sensor und dem Sensor gegenüberliegenden Abschnitt der Rohrinnenwand sein. Nach dieser initialen Ermittlung des Sollwertes wird dieser so gespeichert, dass die Auswerteeinheit auf ihn zugreifen kann. Bei jeder (regelmäßig) durchgeführten Messung mit dem Sensor wird der durch den Sensor gemessene Wert, beispielsweise der Abstandswert, als Teil der durch die Auswerteeinheit durchgeführten Auswertung mit dem Sollwert verglichen, wie nachstehend näher beschrieben.

In einigen Ausführungsformen ist der (Abstands-)Sensor insbesondere als Ultraschallsensor zur Abstandsmessung ausgestaltet. Das bedeutet, der Ultraschallsensor kann den Abstand zwischen sich und einem Hindernis/einem Gegenstand messen. Eine solche Messung kann beispielsweise insbesondere nach dem Prinzip der Laufzeitmessung erfolgen. Hierzu strahlt der Ultraschallsensor - bevorzugt zyklisch - Ultraschallwellenimpulse aus, die sich mit Schallgeschwindigkeit fortbewegen, bis sie auf ein Hindernis/einen Gegenstand, so beispielsweise eine Rohrinnenwand stoßen. Hier werden die Ultraschallimpulse reflektiert. Diese Reflektion wird von einem Empfänger im Ultraschallsensor erfasst. Aus der Zeitspanne zwischen dem Senden und dem Empfangen der Ultraschallwellenimpulse kann der Abstand zwischen Sensor und Gegenstand, also Rohrinnenwand, ermittelt werden. Der hierfür einzustellende Sollwert, welcher initial gemessen wird, kann hierbei insbesondere ein Sollwert für die Laufzeit und/oder ein Sollwert für den gemessenen Abstand sein.

Zur Auswertung der Messungen des zumindest einen Sensors umfasst das System eine Auswerteeinheit. Unter einer solchen Auswerteeinheit wird insbesondere ein Prozessor verstanden, der mittels Softwaremitteln eingerichtet ist, die Messdaten des Sensors auszuwerten. In einigen Ausführungsformen kann die Auswerteeinheit als Teil eines Prozessors eines Laptops eingerichtet sein. Alternativ kann die Auswerteeinheit auch in Form einer dediziert dafür eingerichteten Komponente, wie eines "Korrosions-/Inkrustierungs-Kits" ausgeführt sein. Bevorzugt ist, dass es sich bei der Auswerteeinheit um eine mobile Einheit mit einer Schnittstelle handelt, die eingerichtet ist, mit den Sensoren sowie den Peripheriegeräten und/oder Zentralvorrichtungen unterschiedlicher Brandschutzanlagen zu kommunizieren. Dies erlaubt auch, die Auswerteeinheit an unterschiedlichen physikalischen Orten innerhalb eines Brandschutzbereichs, der von einer Brandschutzanlage abgedeckt wird, anzuordnen, um so beispielsweise parallel zur Auswertung der Messungen die entsprechenden Messwerte noch einmal unmittelbar einzusehen. In anderen Ausführungsformen kann die Auswerteeinheit auch als Modul einer Zentralvorrichtung wie einer Zentrale, wie beispielsweise einer Brandmeldezentrale oder Löschsteuerzentrale ausgeführt sein. In einigen Ausführungsformen ist die Auswerteeinheit insbesondere eingerichtet mit einer Servicevorrichtung für eine Brandschutzanlage zu kommunizieren, die dann ihrerseits als Schnittstelle zu entsprechenden Nutzerendgeräten dienen kann, um dem Nutzer zu ermöglichen, die Kontrolle mittels einer Fernüberwachung durchzuführen. Eine solche Servicevorrichtung ist beispielsweise in der DE 10 2019 111 612.0 oder der EP 19190740.1 gezeigt.

Die Kommunikationseinrichtung ist bevorzugt eingerichtet, die Kommunikationsverbindung kabellos und/oder kabelgebunden und/oder mittels einer Kombination aus kabelloser und kabelgebundener Verbindung herzustellen. Dies kann mittels diverser unterschiedlicher Kommunikationsprotokolle geschehen. In einigen Ausführungsformen handelt es sich bei diesen Kommunikationsprotokollen beispielsweise um Bluetooth, LAN, WLAN, GSM, oder ähnliches. Es ist bevorzugt, dass die Kommunikation kabellos erfolgt.

Erfindungsgemäß ist in oder an einem Rohr des Rohrnetzwerks ein Sensor angeordnet, der der Untersuchung des hydraulischen Zustands zumindest eines Rohres dient.

Unter einem hydraulischen Zustand wird hierbei insbesondere ein Zustand verstanden, der beschreibt, ob das untersuchte Rohr noch in der Lage ist, das Löschfluid wie gewünscht zu leiten, also ob der Rohrdurchmesser noch nicht durch Inkrustierungen zu stark verringert wurde und/oder ob nicht möglicherweise aufgrund von Korrosion Löschfluid aus dem Rohr leckt, oder ähnliches. Unter einer Ermittlung des hydraulischen Zustands des Rohres wird also insbesondere verstanden, dass ermittelt wird, ob sich Ablagerungen an den Rohrinnenwand befinden, also ob Inkrustierungen vorliegen, die die hydraulischen Funktionalitäten des Rohrnetzwerks einschränken. Ferner wird unter der Ermittlung des hydraulischen Zustands des Rohres insbesondere verstanden, dass die Rohrwanddicke des Rohres entsprechend ermittelt wird. Obschon vorstehend die Rohrwanddicke sowie eventuelle Inkrustierungen als Beispiele für Faktoren, die den hydraulischen Zustand des Rohres beeinflussen, genannt werden, können natürlich auch weitere Faktoren für den hydraulischen Zustand des Rohres eine Rolle spielen. So kann eine Korrosion in bestimmten Fällen zwar noch nicht soweit fortgeschritten sein, dass Löschfluid aus dem Rohr gelangt, aber bereits einen Grad erreicht haben, bei dem die Rohrinnenwand derart verändert wurde, dass sich beispielsweise Zusätze im Löschfluid innerhalb der korrodierten Stellen ablagern und nicht mehr zuverlässig durch das Rohr in Richtung Löschfluidauslass geführt werden können.

Die Auswertung der Messdaten durch die Auswerteeinheit erfolgt auf Basis einer Zuordnung des zumindest einen Rohres, in dem sich der Sensor befindet, zu einer bestimmten Rohrkategorie aus einer Vielzahl von Rohrkategorien. Unter einer Rohrkategorie ist hierbei eine Angabe zu verstehen, die die Eigenschaften des Rohres, wie beispielsweise Durchmesser, Länge, Material, Rohrwanddicke, und ähnliches, beschreibt. Unter einem Zuordnen des Rohres zu einer Rohrkategorie kann hierbei insbesondere Verstanden werden, dass gleichartige Rohre, also Rohre mit gleichen oder sehr ähnlichen Eigenschaften, als zu derselben Rohrkategorie gehörig angesehen werden.

Das Maß an Übereinstimmung zwischen den Eigenschaften kann hierbei individuell - entweder durch den Nutzer und/oder durch entsprechende Richtlinien - gewählt werden. Diese Auswahl beeinflusst in dem Fall die Genauigkeit der Überwachung. So kann es für bestimmte Ausführungsformen ausreichen, dass sämtliche Rohre gleichen Durchmessers, egal welche unterschiedliche Länge oder Rohrwanddicke sie haben, einer Rohrkategorie zugeordnet werden. Dies führe zu ein Überwachen mit verringerter Genauigkeit. In anderen Ausführungsformen können einzelne Rohre derselben Rohrkategorie zugordnet werden, wenn sie bezüglich Durchmesser, Rohrlänge und Rohrwanddicke innerhalb eines bestimmten Grenzwertes übereinstimmen. In diesem Falle könnte ein Überwachen mit verbesserter Genauigkeit sichergestellt werden. In einigen Ausführungsformen kann die Zuordnung auch so geschehen, dass schon die kleinste Abweichung zwischen den Eigenschaften der Rohre dazu führt, dass diese Rohre unterschiedlichen Rohrkategorien zugewiesen werden. Im Extremfall kann dies dazu führen, das jedes Rohr einer eigenen Rohrkategorie zugeordnet wird.

Die Auswerteeinheit ist eingerichtet, das Zuordnen auf Basis der in der Auswerteeinheit abgelegten Eigenschaften der Rohre durchzuführen. Hierbei kann der Nutzer vorgeben, wie präzise die Aufteilung in Rohrkategorien durchzuführen ist und/oder wie viele Rohrkategorien maximal zu verwenden sind, oder ähnliches. Es soll an dieser Stelle angemerkt werden, dass die Anzahl an Rohrkategorien auf der einen Seite und die Homogenität der Rohre innerhalb einer Rohrkategorie auf der anderen Seite gegeneinander abzuwägen sind, um ein möglichst vorteilhaftes Verhältnis zwischen Komplexität und Genauigkeit des Überwachens zu erhalten.

Der zumindest eine Sensor wird an oder innerhalb des zumindest einen Rohres angeordnet. Der Begriff "angeordnet" kann hier breit verstanden werden und umfasst auch Sensoren, die - beispielsweise mittels Fernsteuerung - von einem in ein anderes Rohr navigiert werden und in unterschiedlichen Rohren angeordnet werden können. In diesem Fall muss für jeden Sensor eine Station bereitgestellt werden, in die der Sensor nach Durchführen der Messungen zurückkehren kann. Dies dient zum einen dem Aufladeprozess eines solchen, mobilen Sensors. Zum anderen ist es vorgegeben, dass der Sensor in einem Betriebsbereitschaftszustand der Brandschutzanlage, also einem Zustand, in dem die Brandschutzanlage betriebsbereit ist, sich nicht mehr innerhalb des Fluidstroms befinden darf. In dieser Ausführungsform ist der Sensor also in dem Rohr angeordnet.

Alternativ kann der Sensor auch an der Rohrinnenwand eines bestimmten Rohres angeordnet werden und verbleibt dort ortsfest zur Durchführung der Messungen. Dies hat den Vorteil, dass jedem Sensor ein entsprechendes Rohr zugeordnet werden kann, wodurch die Lokalisierung eventueller Veränderungen erleichtert wird. Die Installation sollte hierbei bevorzugt so erfolgen, dass der Sensor in einem Abgang des Rohrnetzwerkes, wie einer Anbohrschelle oder Muffe installiert wird. Hierdurch kann sichergestellt werden, dass der Sensor im Falle eines Auslösens der Löschanlage den Fluidstrom nicht verringert und/oder beeinflusst.

Es ist insbesondere bevorzugt, dass der Sensor an dem Rohr angeordnet ist. Der Begriff an dem Rohr" ist so zu verstehen, dass der Sensor insbesondere an einer Rohrerweiterung des Rohres, wie einer Anbohrschelle oder einer Muffe, angeordnet ist. Der Vorteil an dieser Anordnung ist darin zu sehen, dass die Anbringung an einer Rohrerweiterung es erlaubt, bereits bestehende Rohrnetzwerke verhältnismäßig einfach nachzurüsten. Ferner erlaubt eine derartige Anordnung, die Rohrinnenwand um den gesamten Umfang herum - also auch auf der dem Sensor "gegenüberliegenden Seite" des Rohres - zu messen.

Die einen oder mehreren Sensoren stehen hierbei in kommunikativer Signalverbindung mit der Kommunikationseinrichtung der Auswerteeinheit, um so die durch den Sensor ermittelten Messdaten übermitteln zu können. Im Falle eines mobilen Sensors übermittelt der Sensor ferner seine genaue Position und/oder eine Identifizierung des Rohres, insbesondere dann, wenn der Sensor innerhalb des Rohres angeordnet ist.

Hierzu wird mittels des Sensors eine Messung des durch den Sensor zu messenden Rohres durchgeführt. Insbesondere wird hierbei angenommen, dass das Auftreten von Inkrustierungen und/oder Korrosion innerhalb von gleichartigen Rohren, also innerhalb von Rohren, die zur selben (Installations-)Kategorie gehören, homogen verläuft. Die Sensoren werden dann in einigen zu messenden Rohren (beispielsweise einem Rohr pro Kategorie) genordnet. Bevorzugt erfolgt diese Anordnung mittels einer entsprechenden Rohrerweiterung, wie einer Anbohrschelle oder Muffe. Anschließend wird - pro Rohr oder pro Kategorie der Rohre - ein Sollwert festgelegt, also ein Wert, der angibt, wie das Rohr ohne Inkrustierung und/oder Korrosion auszusehen hat. Dieser Sollwert kann beispielsweise der Abstand zwischen Sensor zur gegenüberliegenden Wand sein - also der Durchmesser des Rohres minus der Länge, mit der der Sensor in das Rohr hineinragt, jedoch können auch andere Sollwerte gewählt werden.

Die Messung wird dann regelmäßig durchgeführt, wobei der gemessene Wert mit dem Sollwert verglichen wird. Weisen gemessener Wert (Istwert) und der Sollwert eine Abweichung auf, die außerhalb der Messungenauigkeit liegt, kann davon ausgegangen werden, dass Inkrustierung und/oder Korrosion vorliegt. Beispielsweise kann eine Verringerung des Istwertes im Vergleich zum Sollwert auf eine Inkrustierung hinweisen. Eine Vergrößerung des Istwertes kann auf eine Verringerung der Rohrwanddicke aufgrund von Korrosion hinweisen.

Bei dieser Anordnung ist zu beachten, dass - da Inkrustierungen bevorzugt an Stellen innerhalb des Rohres vorkommen, an denen das Fluid sich sammelt, also im in Gravitationsrichtung "unteren" Bereich des Rohres, die Anbringung des Sensors bevorzugt so erfolgen sollte, dass dieser außerhalb des Bereichs, an denen das Fluid sich innerhalb des Rohres sammelt, also bevorzugt im in Gravitationsrichtung "oberen" Bereich des Rohres angeordnet werden sollte.

Die so ermittelten Messdaten übermittelt der Sensor sodann über eine entsprechende - bevorzugt drahtlose - Kommunikationsverbindung an die Kommunikationseinrichtung der Auswerteeinheit. Die Auswerteeinheit verwendet die Messdaten zur Bestimmung des Zustands des Rohres. In einigen Ausführungsformen ermittelt die Auswerteeinheit insbesondere, ob - und falls ja - in welchem Maße Inkrustierung/Korrosion an der Rohrinnenwand festgestellt werden konnte und/oder ob - und falls ja - in welchem Maße die Rohrwandstärke sich verändert hat. Die Auswerteeinheit ist eingerichtet, sodann einen entsprechenden Auswertedatensatz zu erzeugen. Dieser kann insbesondere den Zustand des Rohres, beispielsweise einen Ablagerungsgrad und/oder eine Rohrwanddicke, und eine entsprechende Indikation des Rohres, dessen Zustand ermittelt wurde, umfassen.

In einigen Ausführungsformen kann jedes Rohr aus der Vielzahl von Rohren des Rohrnetzwerks einer entsprechenden Rohrkategorie aus der Vielzahl von Rohrkategorien zugeordnet sein, wobei eine Vielzahl von Sensoren an oder innerhalb einer Vielzahl von Rohren angeordnet sein kann. In diesem Fall kann jeweils zumindest einem Rohr einer entsprechenden Rohrkategorie aus der Vielzahl von Rohrkategorien ein Sensor aus der Vielzahl von Sensoren zugeordnet werden. Die Auswerteeinheit kann dann eingerichtet, die Messdaten basierend auf dem Zuordnen jedes der Rohre der Vielzahl von Rohren zu der entsprechenden Rohrkategorie auszuwerten, um einen Auswertedatensatz zu erzeugen, der indikativ für den hydraulischen Zustand aller Rohre der entsprechenden Rohrkategorie ist.

Es ist bevorzugt, dass jedes Rohr des Rohrnetzwerks einer Rohrkategorie zugeordnet werden kann, wobei die Anzahl von Rohrkategorien geringer ist als die Anzahl der Rohre. In diesem Fall kann das System eingerichtet werden, dass an oder innerhalb jeweils eines Rohres in einer Rohrkategorie - als repräsentatives Rohr für eben diese Rohrkategorie - ein Sensor angeordnet wird. Auf diese Weise kann sichergestellt werden, dass für jede Rohrkategorie eine "repräsentative Messung", also eine Messung eines Rohres, die es erlaubt, Rückschlüsse auf den hydraulischen Zustand der weiteren Rohre dieser Rohrkategorie zu ziehen, durchgeführt wird.

In diesem Fall kann die Auswerteeinheit bevorzugt eingerichtet sein, die Messdaten basierend auf dem Zuordnen zu den Rohrkategorien auszuwerten, um so einen entsprechenden Auswertedatensatz auszugeben, der für jede Rohrkategorie einen repräsentativen hydraulischen Zustand angibt, nämlich den Zustand des Rohres, das gemessen wurde. Es wird dann angenommen, dass die weiteren Rohre der entsprechenden Rohrkategorie einen sehr ähnlichen hydraulischen Zustand aufweisen.

Die Verwendung von Rohrkategorien basiert auf der Erkenntnis, dass es unvorteilhaft ist, jedes Rohr einzeln zu überwachen und dass sich in gleichartigen Rohren, also Rohren gleicher Länge und/oder gleichem Durchmesser und/oder gleicher Rohrwanddicke und/oder mit gleichem Löschfluidstand, etc., Korrosion und/oder Inkrustierung annähernd gleich verhalten. Auf Basis dieser Faktoren können die Rohre also in unterschiedliche Rohrkategorien eingeteilt werden. Diese Rohrkategorien können dann verwendet werden, um anhand der Messung in einem bestimmten Rohr Rückschlüsse auf die weiteren Rohre dieser Kategorie zu ziehen. Dies geschieht dadurch, dass die Auswerteeinheit bei der Auswertung der Messdaten miteinbezieht, welcher Rohrkategorie das Rohr angehört und dadurch einen Auswertedatensatz ausgeben kann, in dem die Auswerteergebnisse für jede Rohrkategorie angegeben sind. Liegt bei einem Rohr einer Rohrkategorie Inkrustierung/Korrosion vor, wird dann davon ausgegangen, dass auch die weiteren Rohre dieser Rohrkategorie einen ähnlichen hydraulischen Zustand aufweisen.

Durch das Zuordnen der Rohre zu Rohrkategorien kann also die Anzahl der zu verwendenden Sensoren gering gehalten werden, da im Grunde ein Sensor pro Rohrkategorie ausreichend ist. Dies verringert nicht nur den Aufwand des Einbaus der Sensoren und die Anzahl der Messungen, sondern reduziert auch die Komplexität bei der Auswertung.

Es ist bevorzugt, dass die Auswerteeinheit eine Klassifikationseinrichtung umfasst, welche auf Basis von Trainingsdatensätzen für die Brandschutzanlage trainiert ist und so eine Bewertung der Leistungsfähigkeit und/oder Betriebsbereitschaft der Löschanlage ermöglicht.

Diese Bewertung ist insbesondere in modernen Löschanlagen erforderlich, in denen sehr geringe Rohrdurchmesser verwendet werden, um die für Brandschutzaktionen, insbesondere Löschaktionen, notwendige Löschfluidmenge zu führen. In diesem Falle können schon geringe Inkrustierungen die Leistungsfähigkeit/Wirksamkeit der Brandschutzanlage in Frage stellen, da bereits diese den effektiven Durchmesser zur Führung des Löschfluids stark verringern können.

In einigen Ausführungsformen kann die Auswerteeinheit insbesondere eine Klassifikationseinrichtung umfassen. Unter einer Klassifikationseinrichtung wird hierbei eine Einrichtung verstanden, die mittels maschinellem Lernen eine Auswertung der Messdaten vornehmen kann. Eine solche Klassifikationseinrichtung kann beispielsweise in Form eines oder mehrerer neuronaler Netz oder ähnlichem umgesetzt werden.

Unter dem Begriff trainieren wird hierbei insbesondere die Verwendung eines Trainingsdatensatzes verstanden, der es der Klassifikationseinrichtung erlaubt, Zustände der Brandschutzanlage, in denen Korrosion und/oder Inkrustierung aufgetreten sind, von solchen zu unterscheiden, in denen keine Korrosion und/oder Inkrustierung vorliegt. Hierbei sollte der Trainingsdatensatz der Klassifikationseinrichtung erlauben, möglichst eine Vielzahl von hydraulischen Kennwerten, die auf eine Korrosion und/oder Inkrustierung hindeuten könnten, zu klassifizieren und/oder miteinander in Relation zu setzen. Dies erlaubt der Klassifikationseinrichtung, einen Sollzustand für die Hydraulik der jeweiligen Anlage zu ermitteln. So kann die Auswerteeinheit, die die Klassifikationseinrichtung umfasst, beispielsweise auch eine Bewertung der Leistungsfähigkeit durchführen. Diese kann insbesondere basierend darauf erfolgen, ob der hydraulische Zustand der Rohre des Rohrnetzwerks der Anlage noch die benötigte Leistungsfähigkeit erlaubt.

Es ist bevorzugt, dass Messdaten und/oder Auswerteergebnisse, gegebenenfalls gemeinsam mit einer entsprechenden Nutzereingabe, den bereits vorhandenen Trainingsdatensätzen hinzugefügt werden können. Hierdurch wird mit der Zeit eine ausgreifende Trainingsbasis geschaffen. Auch können generalisierte Erfahrungswerte für andere Brandschutzanlagen als Trainingsdatensatz verwendet werden.

Der Vorteil dieser Ausführungsform besteht darin, dass auch bei unvollständigen Datensätzen eventuelle Probleme früh erkannt werden können, da die Auswerteeinheit die Erkenntnisse auf Trainingsdatensätze stützt, die unter anderem Erfahrungswerten entsprechen. So kann beispielsweise in dem Fall, in dem Messdaten von lediglich einem Teil der Sensoren erhalten werden und/oder in dem Fall, in dem Messdaten eine zuvor noch nicht bekannte Situationen aufzeigen, bereits eine gute Abschätzung des Zustands erreicht werden.

In einer bevorzugten Ausführungsform kann die Kommunikationseinrichtung eine Schnittstelle zur kabellosen Kommunikation umfassen, und die kommunikative Signalverbindung zwischen dem zumindest einen Sensor und der Kommunikationseinrichtung kann eine kabellose Signalverbindung umfassen.

In einigen Ausführungsformen kann die Kommunikation mit den Sensoren kabellos erfolgen. Eine derartig kabellose Kommunikation kann insbesondere über Kommunikationsstandards wie Bluetooth, Infrarot WLAN und/oder ein Mobilfunknetzwerk bereitgestellt werden. In einigen Ausführungsformen können die Sensoren auch eingerichtet sein, mit einem entsprechenden Repeater zu kommunizieren und der Repeater kommuniziert sodann mit der Auswerteeinheit. Auch in diesem Fall kann von einer Signalverbindung zwischen dem zumindest einen Sensor und der Kommunikationseinrichtung gesprochen werden.

In einigen Ausführungsformen ist der zumindest eine Sensor eingerichtet, die gesammelten Messdaten periodisch in vorgegebenen Zeitintervallen an die Kommunikationseinrichtung der Auswerteeinheit zu übermitteln. In einigen Ausführungsformen wird das vorgegebene Zeitintervall festgelegt, um die gesammelten Messdaten quasi-kontinuierlich an die Kommunikationseinrichtung der Auswerteeinheit zu übermitteln.

Es ist bevorzugt, dass die Messdaten regelmäßig (bis quasi-kontinuierlich) an die Auswerteeinheit übermittelt werden und dort auch regelmäßig (bis quasi-kontinuierlich) ausgewertet werden. Die erlaubt, die zeitliche Entwicklung der Zustände der Rohre nachzuvollziehen. Hierdurch können eventuell auftretende Probleme frühzeitig erkannt und gegebenenfalls beseitigt werden.

Die Zeitintervalle, in denen die Übermittlung erfolgen soll, kann hierbei entweder manuell durch den jeweiligen Nutzer oder automatisch, beispielsweise durch die Auswerteeinheit, eingestellt werden. In einigen Ausführungsformen können die Intervalle an die entsprechenden Vorgaben und/oder Richtlinienvorgaben angepasst werden. In einigen Ausführungsformen können die Zeitintervalle auch anlagenspezifisch angepasst werden. Zeigt eine Brandschutzanlage beispielsweise vermehrt Korrosion und/oder Inkrustierung, können die Zeitintervalle verkürzt werden.

Es ist bevorzugt, dass der hydraulische Zustand des zumindest einen Rohres einen Ablagerungsgrad einer Ablagerung innerhalb des Rohres umfasst, wobei die Auswerteeinheit ferner eingerichtet ist, eine Überschreitung eines vordefinierten Grenzwertes für den Ablagerungsgrad zu ermitteln, und in Antwort auf das Ermitteln, eine Ablagerungsindikation auszugeben. In einer Modifikation der obigen Ausführungsform umfasst das System ferner eine Kontrolleinheit, die eingerichtet ist, in Antwort auf die Ablagerungsindikation, eine Beseitigungsaktion einzuleiten.

In einigen Ausführungsformen ist die Auswerteeinheit eingerichtet, eine Indikation, dass der Grad der Ablagerung (also Inkrustierung) innerhalb eines Rohres zu hoch ist, auszugeben. Unter dem Grad der Ablagerung wird hierbei die Menge an Ablagerungen innerhalb des Rohres verstanden, wobei der Grad der Ablagerung dann zu hoch ist und somit einen Grenzwert überschreitet, wenn die hydraulischen Eigenschaften des Rohres, inbesondere die Fluideigenschaften des Löschfluids durch das Rohr, durch diese Ablagerung negativ beeinflusst werden, so dass die Leistungsfähigkeit und/oder Betriebsbereitschaft der Brandschutzanlage nicht mehr gewährleistet ist. Diese Grenzwerte können insbesondere anhand von empirischen Daten ermittelt werden. Alternativ oder zusätzlich können die Grenzwerte beispielsweise anhand einer Simulation eines Modells des Rohrnetzwerkes ermittelt werden. Dieses Modell kann dann dafür verwendet werden, die Fluiddynamik durch das Rohrnetzwerk zu simulieren.

Hierbei ist der Begriff "Ausgeben" breit zu verstehen. Unter Ausgeben kann insbesondere ein Ausgeben eines Warnhinweises an einen Nutzer verstanden werden. Insbesondere bevorzugt ist eine Ausgabe des Hinweises - beispielsweise über eine Remoteverbindung - an eine sachverständige Person als Nutzer der Anlage. Diese kann sodann bewerten, innerhalb welches Zeitraums gegebenenfalls eine Beseitigungsaktion durchgeführt werden muss.

In einigen Ausführungsformen kann der Nutzer in Antwort auf die Warnung dann (manuell) eine Beseitigungsaktion, insbesondere ein Spülen des Rohrnetzwerks, in die Wege leiten, bevor die Ablagerungen sich "festsetzen". Alternativ oder/zusätzlich kann die manuelle Nutzereingabe insbesondere auch ein Einschleusen von Antibiotika in das Rohrnetzwerk bewirken.

Alternativ oder zusätzlich kann das Ausgeben auch ein Ausgeben an eine Kontrolleinheit (in Form einer Warnung) als auch ein Ausgeben an die Kontrolleinheit umfassen. In diesem Fall kann die Beseitigungsaktion automatisch durch eine entsprechende Kontrolleinheit eingeleitet werden. Dies erlaubt eine noch zuverlässigere Verminderung von Ablagerungen, da es nicht nötig ist, sich auf eine Nutzerinteraktion zu verlassen.

Es ist bevorzugt, dass das Auswerten der Messdaten durch die Auswerteeinheit eine Simulation der Fluiddynamik durch zumindest ein Rohr des Rohrnetzwerks unter Berücksichtigung des Auswertedatensatzes umfasst.

Da die Rohre des Rohrnetzwerks unterschiedliche Durchmesser haben können und auch die Eigenschaften der jeweiligen Brandschutzanlage von Anlage zu Anlage variieren können, kann der Ablagerungsrad, der noch akzeptabel ist, von Rohr zu Rohr und von Anlage zu Anlage variieren. Um eine anlagenspezifische Auswertung zu ermöglichen, können Fluiddynamiksimulationen ausgeführt werden, die das hydraulische Verhalten des Löschfluids simulieren. Dies erlaubt, mögliche relevanten Ablagerungen frühzeitig zu erkennen und gegebenenfalls zukünftig auftretende Probleme vorherzusagen.

So kann für den Fall, dass es sich bei der Brandschutzanlage um eine Wasserlöschanlage handelt, die Hydraulik der Brandschutzanlage gemäß Hazen-Williams wie folgt ermittelt werden: $sp = \frac{6 , 05 \times {10}^{5}}{{C}^{1 , 85} \times {d}^{4 , 87}} \times L \times {Q}^{1 , 85} ,$ wobei p einen Druckverlust entlang des Rohres in bar, Q eine Durchflussrate durch das Rohr in l/min, d einen mittleren Innendurchmesser des Rohres in mm, C eine Konstante zur Beschreibung der Rohrrauheit und L eine Äquivalentlänge von Rohr- und/oder Formstücken in m beschreiben.

Auf Basis dieser Formel ist es möglich, individuell bei auftretenden Ablagerungen/Inkrustierungen zu beurteilen, ob die dadurch bedingte Verringerung des Durchmessers des Rohres weiterhin erlaubt, die notwendige Fluidmenge zuverlässig zu führen. Es soll hierbei beachtet werden, dass in üblichen Brandschutzanlagen eine gewisse Menge an Ablagerung/Inkrustierung noch akzeptabel ist, da die das Löschfluid fördernde Pumpe im Normalfall mit höherer Leistung fördert als nötig und daher das Löschfluid auch bei geringen Ablagerungen noch ausreichend gefördert wird. Erzeugen die Ablagerungen/Inkrustierungen jedoch zu große Druckverluste an der Pumpe, ist es nötig, Beseitigungsmaßnahmen einzuleiten, um die Leistungsfähigkeit und/oder die Betriebsbereitschaft der Brandschutzanlage sicherzustellen.

In einigen Ausführungsformen umfasst das System ferner zumindest einen Datenspeicher, der eingerichtet ist, das Auswerteergebnis und/oder die Messdaten zeitgestempelt abzuspeichern.

In einigen Ausführungsformen können das Auswerteergebnis und/oder die Messdaten in einem Datenspeicher abgespeichert werden. Diese Abspeicherung erfolgt bevorzugt zeitgestempelt. Hierdurch kann zum einen nachvollzogen werden, wann welche Messdaten gemessen wurden. Hierdurch kann die zeitliche Entwicklung der Korrosion und/oder Inkrustierung nachvollzogen werden, was zur Früherkennung möglicher Probleme beitragen kann.

Ferner kann ein zeitgestempeltes Abspeichern der Auswerteergebnisse und/oder Messdaten auch die Sicherheit des Systems erhöhen. So erlauben die Zeitstempel, nachzuvollziehen, ob auf den Datenspeicher zugegriffen wurde und die Auswerteergebnisse und/oder Messdaten nachträglich verändert wurden. Dies ermöglicht, eventuelle unerlaubte Zugriffe zu erkennen.

In einigen Ausführungsformen kann das System ferner zumindest ein Nutzerendgerät in kommunikativer Verbindung mit der Auswerteeinheit und/oder dem zumindest einen Sensor umfassen, wobei das Nutzerendgerät eine grafische Benutzeroberfläche umfasst und eingerichtet ist, eine grafische Darstellung des Auswertedatensatzes und/oder der Messdaten zu erzeugen und auf der grafischen Benutzeroberfläche anzuzeigen, wobei das Nutzerendgerät ferner eine Nutzereingabeeinrichtung umfasst, die eingerichtet ist, zumindest eine Nutzereingabe in Antwort auf das Anzeigen zu empfangen.

Es ist bevorzugt, dass der Nutzer mit dem System interagieren kann, um sich beispielsweise über den Zustand des Rohrnetzwerks zu informieren, gegebenenfalls Beseitigungsaktionen vorzunehmen und ähnliches. Hierzu ist die Auswerteeinheit bevorzugt eingerichtet, mit zumindest einem Nutzerendgerät, wie einem Laptop, einem Mobiltelefon, einem Tablet oder ähnlichem zu kommunizieren. Diese Kommunikation kann kabelgebunden oder kabellos erfolgen.

Das Nutzerendgerät kann hierzu eine grafische Benutzeroberfläche und eine Nutzereingabeeinrichtung umfassen. Auf der grafischen Benutzeroberfläche können dem Nutzer die Messdaten und/oder die Auswerteergebnisse angezeigt werden. Alternativ oder zusätzlich kann die grafische Benutzeroberfläche eingerichtet sein, die Ablagerungsindikation und/oder weitere Informationen anzuzeigen. Die Nutzereingabeeinrichtung dient sodann dazu, dem Nutzer zu erlauben, Nutzereingaben vorzunehmen, um mit dem System zu interagieren. Dies erlaubt eine schnelle Reaktion auf mögliche Probleme innerhalb des Rohrnetzwerks.

In einer bevorzugten Ausführungsform kann die Auswerteeinheit eingerichtet sein, über eine Servicevorrichtung mit dem Nutzerendgerät zu kommunizieren und/oder als Teil der Servicevorrichtung eingerichtet sein. Die Servicevorrichtung ist hierbei eingerichtet, über weitere Distanzen mit einem oder mehreren Nutzerendgeräten zu kommunizieren. Dies ermöglicht eine Nutzerinteraktion von einem Nutzer, der sich nicht vor Ort befindet, eröffnet also die Möglichkeit, bestimmte Nutzeraktionen - wie beispielsweise das Einsehen der Messdaten und/oder des Auswertedatensatzes - in dem System per Fernzugriff durchzuführen.

In einem weiteren Aspekt betrifft die vorliegende Erfindung gemäß Anspruch 10 ein Verfahren zum Überwachen eines Rohrnetzwerks für eine Brandschutzanlage, umfassend: Anordnen zumindest eines Sensors an oder innerhalb zumindest eines Rohres aus einer Vielzahl von Rohren des Rohrnetzwerks, wobei der zumindest eine Sensor mit einer Kommunikationseinrichtung einer Auswerteeinheit in kommunikativer Signalverbindung steht, Zuordnen, durch die Auswerteinheit, des zumindest einen Rohres aus der Vielzahl von Rohren basierend auf in der Auswerteeinheit abgelegten Eigenschaften des zumindest einen Rohres zu einer bestimmten Rohrkategorie aus einer Vielzahl von Rohrkategorien, Sammeln, durch den zumindest einen Sensor, von Messdaten, die indikativ sind für Veränderungen eines hydraulischen Zustands des zumindest einen Rohres, Übermitteln, durch den zumindest einen Sensor, der Messdaten an die Kommunikationseinrichtung der Auswerteeinheit, Auswerten, durch die Auswerteeinheit, der Messdaten basierend auf dem Zuordnen des zumindest einen Rohres zu der bestimmten Rohrkategorie und Erzeugen, durch die Auswerteeinheit, eines Auswertedatensatzes, der indikativ für den hydraulischen Zustand des zumindest einen Rohres ist. Das Verfahren umfasst ferner ein Zuordnen eines jeden Rohres aus der Vielzahl von Rohren des Rohrnetzwerks zu einer entsprechenden Rohrkategorie aus der Vielzahl von Rohrkategorien, wobei eine Vielzahl von Sensoren an oder innerhalb einer Vielzahl von Rohren angeordnet ist, wobei jeweils zumindest einem Rohr einer entsprechenden Rohrkategorie aus der Vielzahl von Rohrkategorien ein Sensor aus der Vielzahl von Sensoren zugeordnet ist, und ein Auswerten, durch die Auswerteeinheit, der Messdaten basierend auf dem Zuordnen jedes der Rohre der Vielzahl von Rohren zu der entsprechenden Rohrkategorie, um einen Auswertedatensatz zu erzeugen, der indikativ für den hydraulischen Zustand aller Rohre der entsprechenden Rohrkategorie ist.In einigen Ausführungsformen umfasst das Verfahren ferner ein Empfangen einer Nutzeranfrage an der Auswerteeinheit und/oder den Sensoren, und Übermitteln, in Antwort auf die Nutzeranfrage, der Messdaten an ein Nutzerendgerät zur Bereitstellung für den Nutzer.

In einigen Ausführungsformen kann das System eingerichtet sein, die Übermittlung der Messdaten auch in Antwort auf eine explizite Nutzeranfrage mittels des Nutzerendgeräts erfolgen. Hierdurch kann das Nutzer, beispielsweise ein Wartungstechniker, sich die Messdaten und/oder Auswerteergebnisse "auf Anfrage" noch mal ansehen und, sofern er vor Ort ist, gegebenenfalls eine visuelle Überprüfung der entsprechenden Rohre vornehmen, um sich ein unmittelbares Bild vom Zustand der Rohre zu machen. Dies erlaubt dem Nutzer beispielsweise, Anpassungen an der Auswerteeinheit vorzunehmen, um deren Arbeitsweise zu verbessern.

Das erfindungsgemäße Verfahren macht sich die Vorteile und Ausführungsformen des erfindungsgemäßen Systems zu eigen, weshalb bezüglich dieser Vorteile und Ausführungsformen auf die voranstehenden Ausführungen verwiesen wird.

In einem weiteren Aspekt betrifft die vorliegende Erfindung ein Computerprogram mit Programmcodemitteln, die, wenn die sie auf einem Prozessor ausgeführt werden, den Prozessor veranlassen, das vorstehend beschriebene Verfahren durchzuführen.

In einem noch weiteren Aspekt betrifft die Erfindung eine Brandschutzanlage umfassend ein System wie vorstehend beschrieben.

Die Erfindung wird nachfolgend unter Bezugnahme auf die beigefügten Figuren anhand bevorzugter Ausführungsbeispiele näher beschrieben. Hierbei zeigen:
- Fig. 1: eine schematische Darstellung einer erfindungsgemäßen Systemarchitektur in einer ersten Ausführungsform,
- Fig. 2: eine schematische Darstellung einer erfindungsgemäßen Systemarchitektur gemäß einer Erweiterung der ersten Ausführungsform, und
- Fig. 3: eine schematische Darstellung der Funktionsweise eines erfindungsgemäßen Ultraschallsensors.

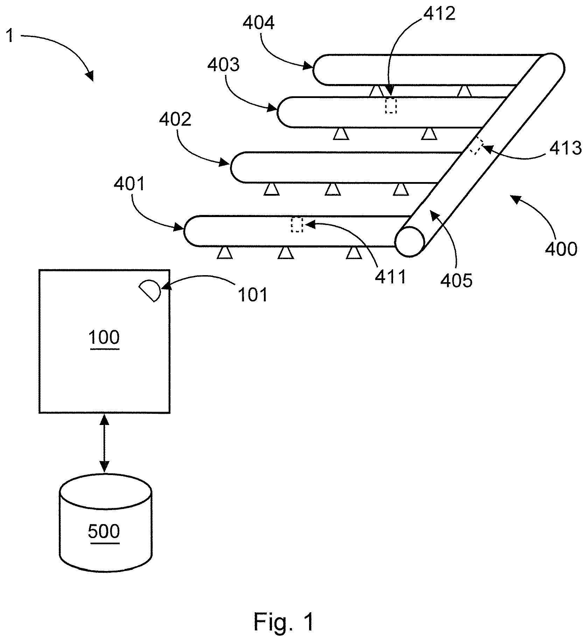

Die Fig.1 zeigt eine Systemarchitektur eines Systems 1 gemäß einer ersten Ausführungsform. Das System 1 umfasst eine Auswerteeinheit 100 mit einer Kommunikationseinrichtung 101. Die Auswerteeinheit 100 steht in kommunikativer Verbindung mit einem Datenspeicher 500. Diese kommunikative Verbindung kann entweder mittels der Kommunikationseinrichtung 101 hergestellt werden. Alternativ oder zusätzlich kann die Auswerteeinheit 100 auch eine eigens dafür eingerichtete Kommunikationseinrichtung (nicht dargestellt) umfassen.

Die Auswerteeinheit 100 kann insbesondere ausgestaltet sein, einen vordefinierten Grenzwert für einen Ablagerungsgrad eines Rohres zu ermitteln, wobei dieser Ablagerungsgrad abhängig von der Rohrkategorie ermittelt wird. In einigen Ausführungsformen ist die Auswerteeinheit 100 hierzu dazu eingerichtet, entsprechende Grenzwerte für die minimalen Rohrquerschnitte der jeweiligen Rohre für die entsprechenden Rohrkategorien abzuspeichern und/oder aus einem Speicher auszulesen. Diese Grenzwerte geben hierbei an, bei welchem minimalen Rohrquerschnitt ein Rohr einer bestimmten Rohrkategorie noch ausreichend Löschfluid leiten kann, also welcher Rohrquerschnitt für ein Rohr einer bestimmten Rohrkategorie minimal gegeben sein muss, um die Funktionsfähigkeit des Systems 1 zu gewährleisten.

Das System 1 umfasst ferner ein Rohrnetzwerk 400. Das Rohrnetzwerk 400 umfasst die Rohre 401, 402, 403 und 404 und das Rohr 405, welches als Verteilerleitung dient. Ob schon in der schematischen Darstellung der Fig.1 lediglich fünf Rohre dargestellt sind, soll an dieser Stelle erwähnt werden, dass das Rohrnetzwerk 400 auch weniger oder mehr als fünf Rohre umfassen kann. Im Rohrnetzwerk 400 gemäß der Fig. 1 haben die Rohre 401 und 402 eine ähnliche Länge, einen ähnlichen Durchmesser und eine ähnliche Rohrwanddicke und sind daher derselben Rohrkategorie 1 zugeordnet. Die Rohre 403 und 404 weisen ebenfalls vergleichbare Eigenschaften auf und sind daher derselben Rohrkategorie 2 zugeordnet. Das Rohr 405 ist ferner der Rohrkategorie 3 zugeordnet.

Die Ausführungsform der Fig.1 zeigt ferner die Sensoren 411, 412 und 413, welche in der spezifischen Ausführungsform der Fig. 1 als Ultraschallsensoren 411, 412 und 413 ausgestaltet sind. In der spezifischen Ausführungsform der Fig.1 ist der Ultraschallsensor 411 in dem Rohr 401, welches zu der Rohrkategorie 1 gehört, angeordnet. Der Ultraschallsensor 412 ist innerhalb des Rohres 403, welches zur Rohrkategorie 2 gehört angeordnet und der Ultraschallsensor 413 ist innerhalb des Rohres 405, welches der Rohrkategorie 3 angehört, angeordnet. Mittels der Messungen für die Rohre 401 und 403 können somit, aufgrund des Zuordnens der Rohre 402 und 404 zu Rohrkategorie 1 beziehungsweise 2, auch Rückschlüsse auf den hydraulischen Zustand dieser beiden Rohre geschlossen werden.

In der spezifischen Ausführungsform der Fig. 1 erfolgt die Anordnung der Ultraschallsensoren 411, 412 und 413 innerhalb der Rohre 401, 403 und 405 bevorzugt durch eine Anordnung der Ultraschallsensoren 411, 412 und 413 in einer Anbohrschelle für die jeweiligen Rohre. Dies ermöglicht eine nachträgliche Anordnung der Ultraschallsensoren 411, 412 und 413 und/oder einen vereinfachten Austausch oder eine vereinfachte Reparatur der Ultraschallsensoren 411, 412 und 413 im Falle eines Ausfalls.

In der spezifischen Ausführungsform der Fig.1 handelt es sich bei dem Rohrnetzwerk 400 um ein Rohrnetzwerk für eine Brandschutzanlage, insbesondere eine Sprinkleranlage. Die vorlegende Erfindung ist jedoch auch auf jede andere Art von Rohrnetzwerk, in welchem Ablagerungen ein Problem sein können, anwendbar.

In der spezifischen Ausführungsform der Fig.1 wird das System 1 zum Überwachen des Rohrnetzwerkes 400 eingesetzt. Hierzu stehen die Kommunikationseinrichtung 101 der Auswerteeinheit 100 und die Ultraschallsensoren 411, 412 und 413 in Signalkommunikation. Die Ultraschallsensoren 411, 412 und 413 sind hierzu eingerichtet, Messdaten, die indikativ für Ablagerungen an einer Rohrinnenwand des jeweiligen Rohres 401, 403 und 405 sind, zu sammeln und diese Messdaten an die Kommunikationseinrichtung 101 der Auswerteeinheit 100 zu übermitteln.

In der spezifischen Ausführungsform der Fig.1 erfolgt diese Übermittlung der Messdaten in periodischen Zeitintervallen von jeweils einem Jahr. Das bedeutet, alle Ultraschallsensoren 411, 412 und 413 senden über die Kommunikationsverbindung zur Kommunikationseinrichtung 101 jährlich entsprechende Messdaten, die für Veränderungen des hydraulischen Zustands ihrer jeweiligen Rohre 401, 403 und 405, beispielsweise für Ablagerungen innerhalb der Rohre 401, 403 und 405 und/oder für Änderungen der Rohrwandstärke der jeweiligen Rohre 401, 403 und 405 indikativ sind. Alternativ oder zusätzlich kann das System 1 aber auch so eingerichtet werden, dass die Übermittlung der Messdaten in kürzeren oder längeren Zeitintervallen geschieht. Hierbei können die einzelnen Ultraschallsensoren 411, 412 und 413 auch so getaktet werden, dass beispielsweise Ultraschallsensor 411 als erstes seine Messdaten übermittelt, die Übermittlung stoppt und erst dann der Ultraschallsensor 412 und danach der Ultraschallsensor 413 die jeweiligen Messdaten übermitteln. So kann die Übermittlung der Messdaten zeitgestapelt erfolgen, wodurch die Messdaten den Ultraschallsensoren 411, 412 und 413 ihren jeweiligen Rohren und Rohrkategorien einfacher zuzuordnen sind, was zu einer einfacheren Zuordnung der Messdaten zu ihren jeweiligen Rohren 411, 412 und 413 führt. In einigen Ausführungsformen können die Messdaten aller Ultraschallsensoren 411, 412und 413 aber auch gleichzeitig übermittelt werden, wobei diese Übermittlung in vorgegebenen Zeitintervallen geschieht.

Die Kommunikationseinrichtung empfängt die Messdaten, die indikativ für Ablagerungen an der Rohrinnenwand des jeweiligen Rohres 401, 403 und 405, welches durch die Ultraschallsensoren 411, 412 beziehungsweise 413 gemessen wird, sind und übermittelt diese Messdaten an die Auswerteeinheit 100. Die Auswerteeinheit 100 ist eingerichtet, die Messdaten auszuwerten, um so einen Auswertedatensatz zu erzeugen. In der spezifischen Ausführungsform der Fig. 1 umfasst der Auswertedatensatz insbesondere eine Indikation für einen Ablagerungsgrad von Ablagerungen an den jeweiligen Rohrinnenwänden der Rohre 401, 403 und 405. Ferner umfasst der Auswertedatensatz die Zuordnung der Rohre 401, 403 und 405 zu den entsprechenden Rohrkategorien 1, 2 beziehungsweise 3. In der spezifischen Ausführungsform der Fig. 1 gibt der Auswertedatensatz ferner den (geschätzten) Ablagerungsgrad für das Rohr 402 an. Hierzu ordnet die Auswerteeinheit das Rohr 402 ebenfalls der Rohrkategorie 1 zu und gibt an, dass der Ablagerungsgrad für das Rohr 402 aufgrund der großen Homogenität mit dem Rohr 401 ähnlich sein wird wie der Ablagerungsgrad für Rohr 401. Gleichermaßen gibt der Auswertedatensatz den (geschätzten) Ablagerungsgrad für das Rohr 404 an. Hierzu ordnet die Auswerteeinheit das Rohr 404 der Rohrkategorie 2 zu und gibt an, dass der Ablagerungsgrad für das Rohr 404 aufgrund der Ähnlichkeit zum Rohr 403 ähnlich der dem des Rohres 403 sein wird. Der Auswertedatensatz kann ferner eine Indikation der Rohrwanddicke umfassen. Auch die Rohrwanddicke kann auf Basis der Rohrwandkategorien nicht nur für das tatsächlich gemessene Rohr ermittelt werden, sondern ferner für alle Rohre derselbe Rohrwandkategorie auf Basis der Messung für das tatsächlich gemessene Rohr vorhergesagt werden.

Der Auswertedatensatz wird sodann von der Auswerteeinheit 100, gegebenenfalls zusammen mit den Messdaten und/oder einem Zeitstempel und/oder weiteren Informationen, die zur Überwachung der Brandschutzanlage, und insbesondere zur Überwachung des Zustands der Rohre des Rohrnetzwerkes 400 der Brandschutzanlage, verwendet werden können, an einen Datenspeicher 500 übermittelt.

In der spezifischen Ausführungsform der Fig.1 ist die Auswerteeinheit 100 eingerichtet, den Auswertedatensatz, gegebenenfalls zusammen mit den Messdaten und/oder den zusätzlichen Informationen zeitgestempelt in dem Datenspeicher 500 abzuspeichern. Dies erlaubt, auf lange Sicht eine Protokollierung der Ablagerungsentwicklung innerhalb des Rohrnetzwerkes 400 der Brandschutzanlage zu erzeugen.

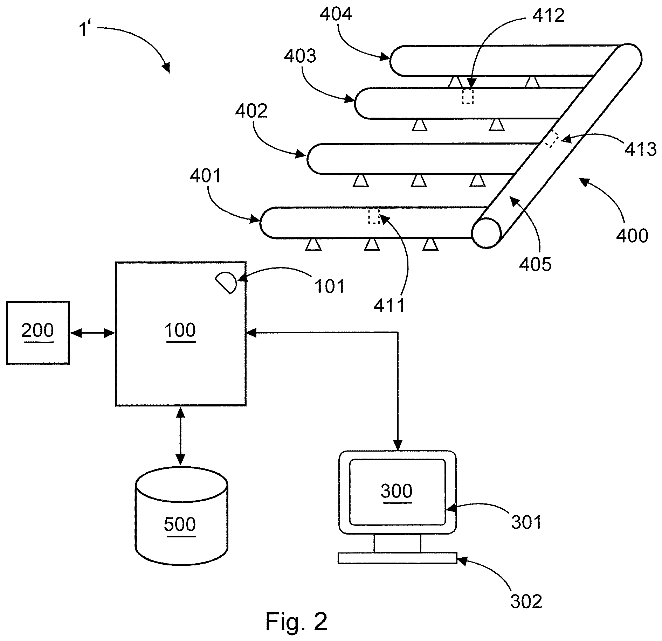

Die Fig.2 zeigt eine Systemarchitektur eines Systems 1' gemäß einer Erweiterung der Ausführungsform der Fig.1. Gleiche Elemente des Systems 1' sind mit gleichen Bezugszeichen bezeichnet.

Das System 1' umfasst ebenfalls eine Auswerteeinheit 100 mit einer Kommunikationseinrichtung 101. Auch im Systems 1' steht die Auswerteeinheit 100 in kommunikativer Verbindung mit einem Datenspeicher 500, wobei diese kommunikative Verbindung entweder mittels der Kommunikationseinrichtung 101 oder mit einer eigens dafür eingerichteten Kommunikationseinrichtung ausgeführt werden kann. Die Auswerteeinheit 100 steht ferner in kommunikativer Verbindung mit einer Kontrolleinheit 200 sowieso einem Nutzerendgerät 300 umfassend eine graphische Benutzeroberfläche 301 und eine Nutzereingabeeinrichtung 302.

Auch das System 1' umfasst ein Rohrnetzwerk 400 mit den Rohren 401, 402, 403, 404 und 405. In der spezifischen Ausführungsform der Fig.2 sind in den Rohren 401, 403und 405 entsprechende Sensoren 411, 412 und 413 angeordnet, die in der spezifischen Ausführungsform der Fig. 2 als Ultraschallsensoren 411, 412 und 413 ausgestaltet sind. Auch in der spezifischen Ausführungsform der Fig. 2 erfolgt die Anordnung der Ultraschallsensoren 411, 412 und 413 innerhalb der Rohre 401, 403 und 405 bevorzugt durch eine Anordnung der Ultraschallsensoren 411, 412 und 413 in einer Anbohrschelle für die jeweiligen Rohre.

Wie bereits im Zusammenhang mit der Fig.1 erläutert, ist die Kommunikationseinrichtung 101 der Auswerteeinheit 100 dazu eingerichtet, mit den Ultraschallsensoren 411, 412 und 413 zu kommunizieren. Über die Kommunikationsverbindung zwischen der Kommunikationseinrichtung 101 und den jeweiligen Ultraschallsensoren 411, 412 und 413 können Messdaten, die indikativ für den Zustand der jeweiligen Rohre 401, 403 und 405, insbesondere indikativ für Ablagerung an der Rohrinnenwand und/oder Veränderungen der Rohrwandstärke des jeweiligen Rohres 401, 403 und 405 sind, zu übermitteln.

Die Kommunikationseinrichtung 101 der Auswerteeinheit 100 empfängt diese Messdaten und die Auswerteeinheit 100 wertet die Messdaten wie im Zusammenhang mit der Fig. 1 beschrieben aus, um einen entsprechenden Auswertedatensatz, der indikativ für den Zustand der Rohre 401, 403 und 405, sowie der Rohre 402 und 404 ist, zu erzeugen.

Die Auswerteeinheit 100 ist ferner eingerichtet, den Auswertedatensatz, gegebenenfalls gemeinsam mit den Messdaten, in dem Datenspeicher 500 abzuspeichern. Diese Abspeicherung erfolgt bevorzugt zeitgestempelt, um zu ermöglichen, ein Protokoll über die Überwachung des Rohrnetzwerkes 400 zu erstellen.

In der spezifischen Ausführungsform der Fig.2 umfasst das Auswerteergebnis insbesondere einen Ablagerungsgrad für Ablagerungen an der Rohrinnenwand des entsprechen Rohres. Hierbei ist die Auswerteeinheit 100 ferner eingerichtet, einen vordefinierten Grenzwert für einen Ablagerungsgrad zu ermitteln und diesen anhand der Messdaten ermittelten Ablagerungsgrad zu vergleichen. In der spezifischen Ausführungsform der Fig.2 stellt dieser vordefinierte Grenzwert einen Maximalwert für einen Ablagerungsgrad dar, bei dem noch davon ausgegangen werden kann, dass der Fluiddurchfluss durch das entsprechende Rohr 401, 402, 403, 404 und 405 nicht negativ beeinfluss wird. Das bedeutet, bei Überschreiten dieses vordefinierten Grenzwertes für den Ablagerungsgrad muss davon ausgegangen werden, dass ein ausreichender Fluidfluss durch das entsprechende Rohr 401, 402, 403, 404 und 405 nicht mehr gewährleistet werden kann.

Stellt die Auswerteeinheit 100 beim Abgleichen des Grenzwertes mit dem tatsächlich ermittelten Ablagerungsgrad fest, dass eine solche Überschreitung des vordefinierten Grenzwertes vorliegt, ist die Auswerteeinheit 100 ferner eingerichtet, eine Ablagerungsindikation auszugeben. In der Ausführungsform der Fig.2 umfasst diese Ablagerungsindikation insbesondere einen Hinweis, dass der Ablagerungsgrad innerhalb des entsprechenden Rohres 401, 402, 403, 404 und 405 so hoch ist, dass nicht mehr von einem zufriedenstellenden Fluidfluss ausgegangen werden kann. Hierbei kann die Ablagerungsindikation spezifisch das oder die Rohre angeben, in denen der Ablagerungsgrad zu hoch ist. Alternativ oder zusätzlich kann die Ablagerungsindikation jedoch auch die Rohrkategorie angeben, für welche ein zu hoher Ablagerungsgrad festgestellt wurde.

In der spezifischen Ausführungsform der Fig.2 ist die Auswerteeinheit 100 so dann eingerichtet, diese Ablagerungsindikation an das Nutzerendgerät 300 auszugeben. Das Nutzerendgerät 300 beziehungsweise dessen graphische Benutzeroberfläche ist eingerichtet, eine graphische Darstellung der Ablagerungsindikation zu erzeugen und anzuzeigen. Das Anzeigen der graphischen Darstellung der Ablagerungsindikation kann hierbei einen Hinweis enthalten, eine Beseitigungsaktion einzuleiten. Alternativ oder zusätzlich kann die graphische Darstellung der Ablagerungsindikation auch einen Hinweis enthalten, dass die Beseitigungsaktion bereits eingeleitet wurde. Alternativ oder zusätzlich kann die Ablagerungsindikation auch eine Liste der Rohre und/oder Rohrkategorien umfassen, die von der Ablagerung betroffen sind.

Zur Einleitung einer Beseitigungsaktion kann die Auswerteeinheit 100 in kommunikativer Signalverbindung mit einer Kontrolleinheit 200 stehen. Die Kontrolleinheit 200 kann insbesondere eingerichtet ein, die Ablagerungsindikation von der Auswerteeinheit 100 zu empfangen und, in Antwort auf die Ablagerungsindikation, eine Beseitigungsaktion einzuleiten.

In der spezifischen Ausführungsform der Fig.2 handelt es sich bei einer solchen Beseitigungsaktion insbesondere um ein Spülen des Rohrnetzwerks 400, durch welches eventuelle Ablagerungen an den Rohrinnenwänden der betroffenen Rohre aus der Vielzahl von Rohren 401, 402, 403, 404 und 405 entfernt werden können. In einigen Ausführungsformen erfolgt die Beseitigungsaktion hierbei vollautomatisch in Antwort auf die Ablagerungsindikation. In anderen Ausführungsformen erfolgt die Beseitigungsaktion in Antwort auf die Ablagerungsindikation erst, wenn die Kontrolleinheit 200 eine entsprechende Nutzereingabe, insbesondere eine Bestätigung durch den Nutzer, über die Nutzereingabeeinrichtung 302 des Nutzerendgeräts erhält.

Wenn die Beseitigungsaktion abgeschlossen ist, ist es bevorzugt, dass die Ultraschallsensoren 411, 412 und 413 für eine erneute Messung verwendet werden. Die so ermittelten Messdaten werden dann wieder an die Auswerteeinheit 100 mittels der Kommunikationseinrichtung 101 übermittelt und entsprechend ausgewertet. Diese Auswertung umfasst insbesondere einen Abgleich mit dem vorgegebenen Grenzwert. Wird im Anschluss an die Beseitigungsaktion dieser Grenzwert für den Ablagerungsgrad unterschritten, wird die Beseitigungsaktion als erfolgreich eingestuft. Ist der Grenzwert noch nicht überschritten, kann eine erneute Beseitigungsaktion durchgeführt werden. Alternativ oder zusätzlich kann auch ein entsprechender Hinweis an das Nutzerendgerät 300 ausgegeben werden, dass das Rohrnetzwerk immer noch nicht wieder funktionsfähig ist. In so einem Fall kann es sein, dass das Rohr, für das ein sehr hoher Ablagerungsgrad ermittelt wurde, oder die Rohre der entsprechenden Rohrkategorie ausgetauscht werden müssen.

Obwohl in der spezifischen Ausführungsform der Fig.2 die graphische Benutzeroberfläche 301 des Nutzerendgeräts 300 dafür verwendet wird, die Ablagerungsindikation anzuzeigen, kann die graphische Benutzeroberfläche 301 auch eingerichtet sein, eine graphische Darstellung des Auswertedatensatzes und/oder der Messdaten zu erzeugen und diese einem Nutzer anzuzeigen.

Ferner kann das Auswerten der Messdaten durch die Auswerteeinheit 100 auf eine Vielzahl von Arten erfolgen und eine Vielzahl von Schritten umfassen. In einer spezifischen Ausführungsform der Erfindung umfasst das Auswerten der Messdaten durch die Auswerteeinheit 100 insbesondere eine Simulation der Fluiddynamik des Fluidflusses durch zumindest eines der Rohre 401, 402, 403, 404 und 405 des Rohrnetzwerks 400 unter Berücksichtigung der Messdaten und/oder des Auswertedatensatzes. Das bedeutet, die Simulation der Fluiddynamik zieht mögliche Ablagerungen an den Rohrinnenwänden der Rohre 401, 402, 403, 404 und 405 sowie mögliche Veränderungen der Rohrwandstärke als Randbedingung in die Simulation mit ein. Dies erlaubt, für jedes Rohr, insbesondere für jede Rohrkategorie, individuell zu ermitteln, ob der hydraulische Zustand der jeweiligen Rohre noch akzeptabel ist oder nicht.

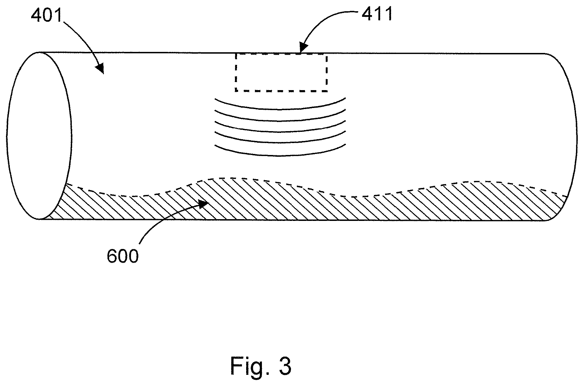

Die Fig.3 zeigt eine schematische Darstellung der Funktionsweise eines Ultraschallsensors 411 der innerhalb eines Rohres 401 eines Rohrnetzwerkes 400 angeordnet sein kann. In der spezifischen Ausführungsform der Fig.3 erfolgt die Anordnung des Ultraschallsensors 411 an der Innenwand des Rohres 401. Es soll jedoch verstanden werden, dass der Ultraschallsensor 411 ebenfalls in einer Anbohrschelle und/oder einer Muffe des Rohres 401 angeordnet werden könnte. Der Ultraschallsensor 411 der Fig.3 umfasst einen Ultraschallsenderempfänger, welcher in Gravitationsrichtung gesehen innerhalb des oberen Abschnitts des Rohres 401 angeordnet ist. Diese Anordnung im oberen Teil ist als vorteilhaft anzusehen, da sich Inkrustierungen/Ablagerungen vornehmlich im in Gravitationsrichtung unteren Abschnitt des Rohres ansammeln.

In der spezifischen Ausführungsform der Fig. 3 ist der Ultraschallsensor 411 als Abstandssensor eingerichtet, kann also den Abstand zwischen sich und einem Hindernis odereinem Gegenstand messen. In der Ausführungsform der Fig. 3 erfolgt diese Abstandsmessung über eine Laufzeitmessung. Das bedeutet, der Ultraschallsensor 411 umfasst einen Senderempfänger, der eingerichtet ist entsprechende Ultraschallwellen in das Rohrinnere abzugeben. Die Ultraschallwellen propagieren durch das Rohr, bis Sie auf ein Hindernis stoßen und werden sodann durch das Hindernis reflektiert. Der Ultraschallsenderempfänger empfängt die reflektierte Ultraschallwelle. Die Abstandsmessung erfolgt dann durch Ermittlung der Zeitspanne zwischen dem Senden und dem Empfangen der Ultraschallwelle.

Um Inkrustierungen und/oder Korrosion messen zu können, wird der Ultraschallsensor 411 bei der Installation zunächst für das jeweilige Rohr (und damit die Rohrkategorie) eingestellt. Das bedeutet, es wird ein Sollwert ermittelt oder festgelegt, der angibt, welcher Abstand innerhalb des Rohres gemessen wird, wenn keine Inkrustierung und/oder Korrosion vorliegt. In der spezifischen Ausführungsform der Fig. 3 wird zur Ermittlung dieses Sollwerts der Abstand zwischen Sensor und gegenüberliegender Rohrinnenwand ermittelt, wobei davon ausgegangen wird, dass hier noch keine Inkrustierung und/oder Korrosion vorliegt. Der so ermittelte Sollwert wird dann für das entsprechende Rohr - und damit die entsprechende Rohrkategorie - abgespeichert. Diese Speicherung kann hierbei insbesondere im Datenspeicher 500 erfolgen. Alternativ oder zusätzlich kann hierfür auch ein dedizierter Datenspeicher verwendet werden. Entscheidend ist, dass die Auswerteeinheit 100 in der Lage ist, auf den Sollwert zuzugreifen.

Nach der Abspeicherung des Sollwertes, kann dieser bei jeder durchgeführten Messung mit dem Ultraschallsensor abgerufen und mit dem durch den Ultraschallsensor gemessenen Wert verglichen werden. Dieser Vergleich kann insbesondere als Teil der Auswertung durch die Auswerteeinheit durchgeführt werden.

In der Fig. 3 zeigt das Rohr 401 Ablagerungen 600, die den Abstand zwischen gegenüberliegender Seite der Rohrinnenwand und dem Ultraschallsensor 411 verkürzen. Das bedeutet, die Laufzeit der Schallwellen in Richtung der Ablagerung 600 und wieder zurück zum Ultraschallsensor 411 wird verkürzt. Dieses Messergebnis wird von dem Ultraschallsensor 411 an die Auswerteeinheit 100 übermittelt, die das Messergebnis sodann auswertet. In der Ausführungsform der Fig. 3 bedeutet dies konkret, dass die Auswerteeinheit 100 die Laufzeit - und damit die gemessenen Abstand - für das Rohr 401 im hydraulischen Zustand mit der Ablagerung 600 mit dem Sollwert für den Abstand und die damit verbundene Laufzeit vergleicht. Ergibt dieser Vergleich, dass der gemessene Wert um mehr als einen vorbestimmten Grenzwert - der die noch akzeptable Abweichung angibt - abweicht, wird dies in dem Auswertedatensatz vermerkt. Ferner erzeugt die Auswerteeinheit eine Ablagerungsindikation und gibt diese aus. Diese Ablagerungsindikation gibt an, dass das Rohr 401 - und alle Rohre, die derselben Kategorie wie das Rohr 401 angehören - einen hydraulischen Zustand aufweisen, in dem die Leistungsfähigkeit der Brandschutzanlage nicht mehr sichergestellt werden kann. Dies erlaubt, für alle diese Rohre eine entsprechende Beseitigungsaktion - entweder manuell durch den Nutzer oder automatisch - einzuleiten.

Ergibt der Vergleich hingegen, dass der gemessene Wert um weniger als den vorbestimmten Grenzwert abweicht, wird dies zwar ebenfalls in dem Auswertedatensatz vermerkt, jedoch keine Ablagerungsindikation ausgegeben. Dies erlaubt, mögliche Ablagerungstrends für die betroffenen Rohre - also alle Rohre der entsprechenden Rohrkategorie - frühzeitig zu identifizieren und entsprechend zu reagieren.

Auf diese Weise kann eine effizientere und vorausschauende Überwachung der Inkrustierung und/oder Korrosion der Rohre eines Rohrnetzwerks etabliert werden.

### Bezugszeichenliste:

| | |
|---|---|
| System | 1, 1' |
| Auswerteeinheit | 100 |
| Kommunikationseinrichtung | 101 |
| Kontrolleinheit | 200 |
| Nutzerendgerät | 300 |
| Grafische Benutzeroberfläche | 301 |
| Nutzereingabeeinrichtung | 302 |
| Rohrnetzwerk | 400 |
| Rohr | 401, 402, 403, 404, 405 |
| Ultraschallsensor | 411, 412, 413 |
| Datenspeicher | 500 |
| Ablagerung | 600 |

## Patentansprüche

1. System (1) zum Überwachen eines Rohrnetzwerks (400) für eine Brandschutzanlage, umfassend:
eine Auswerteeinheit (100) mit einer Kommunikationseinrichtung (101), und
zumindest einen Sensor (411, 412, 413), der an oder innerhalb zumindest eines Rohres (401, 402, 403, 404, 405) aus einer Vielzahl von Rohren (401, 402, 403, 404, 405) des Rohrnetzwerks (400) angeordnet ist und mit der Kommunikationseinrichtung (101) in kommunikativer Signalverbindung steht,
wobei die Auswerteeinheit (100) eingerichtet ist, das zumindest eine Rohr (401, 402, 403, 404, 405) aus der Vielzahl von Rohren (401, 402, 403, 404, 405) basierend auf in der Auswerteeinheit abgelegten Eigenschaften des zumindest einen Rohres (401, 402, 403, 404, 405) einer bestimmten Rohrkategorie aus einer Vielzahl von Rohrkategorien zuzuordnen, wobei
der zumindest eine Sensor (411, 412, 413) eingerichtet ist, Messdaten zu sammeln, die indikativ sind für Veränderungen eines hydraulischen Zustands des zumindest einen Rohres (401, 402, 403, 404, 405), und diese Messdaten an die Kommunikationseinrichtung (101) der Auswerteeinheit (100) zu übermitteln, wobei
die Auswerteeinheit (100) eingerichtet ist, die Messdaten basierend auf dem Zuordnen des zumindest einen Rohres (401, 402, 403, 404, 405) zu der bestimmten Rohrkategorie auszuwerten, um einen Auswertedatensatz zu erzeugen, der indikativ für den hydraulischen Zustand des zumindest einen Rohres (401, 402, 403, 404, 405) ist;
wobei jedes Rohr (401, 402, 403, 404, 405) aus der Vielzahl von Rohren (401, 402, 403, 404, 405) des Rohrnetzwerks einer entsprechenden Rohrkategorie aus der Vielzahl von Rohrkategorien zugeordnet ist, wobei eine Anzahl von Rohrkategorien aus der Vielzahl von Rohrkategorien kleiner ist als eine Anzahl von Rohren (401, 402, 403, 404, 405) aus der Vielzahl von Rohren (401, 402, 403, 404, 405);
wobei eine Vielzahl von Sensoren (411, 412, 413) an oder innerhalb einer Vielzahl von Rohren (401, 402, 403, 404, 405) angeordnet ist, wobei jeweils zumindest einem Rohr (401, 402, 403, 404, 405) einer entsprechenden Rohrkategorie aus der Vielzahl von Rohrkategorien ein Sensor (411, 412, 413) aus der Vielzahl von Sensoren (411, 412, 413) zugeordnet ist, und
wobei die Auswerteeinheit (100) eingerichtet ist, die Messdaten basierend auf dem Zuordnen jedes der Rohre (401, 402, 403, 404, 405) der Vielzahl von Rohren (401, 402, 403, 404, 405) zu der entsprechenden Rohrkategorie auszuwerten, um einen Auswertedatensatz zu erzeugen, der indikativ für den hydraulischen Zustand aller Rohre (401, 402, 403, 404, 405) der entsprechenden Rohrkategorie ist.

2. System (1) nach Anspruch 1, wobei die Auswerteeinheit (100) eine Klassifikationseinrichtung umfasst, welche auf Basis von Trainingsdatensätzen eine Bewertung der Brandschutzanlage ausführt.

3. System (1) nach einem der vorherigen Ansprüche, wobei die Kommunikationseinrichtung (101) eine Schnittstelle zur kabellosen Kommunikation umfasst, und wobei die kommunikative Signalverbindung zwischen dem zumindest einen Sensor (411, 412, 413) und der Kommunikationseinrichtung (101) eine kabellose Signalverbindung umfasst.

4. System (1) nach einem der vorherigen Ansprüche, wobei der zumindest eine Sensor (411, 412, 413) eingerichtet ist, die gesammelten Messdaten periodisch in vorgegebenen Zeitintervallen an die Kommunikationseinrichtung (101) der Auswerteeinheit (100) zu übermitteln.

5. System (1) nach einem der vorherigen Ansprüche, wobei der hydraulische Zustand des zumindest einen Rohres (401, 402, 403, 404, 405) einen Ablagerungsgrad von Ablagerungen an einer Rohrinnenwand des Rohres (401, 402, 403, 404, 405) umfasst, wobei die Auswerteeinheit (100) ferner eingerichtet ist,
eine Überschreitung eines vordefinierten Grenzwertes für den Ablagerungsgrad zu ermitteln, und
in Antwort auf das Ermitteln, eine Ablagerungsindikation auszugeben.

6. System (1) nach Anspruch 5, ferner eine Kontrolleinheit (200) umfassend, die eingerichtet ist, in Antwort auf die Ablagerungsindikation, eine Beseitigungsaktion einzuleiten.

7. System (1) nach einem der vorherigen Ansprüche, wobei das Auswerten der Messdaten durch die Auswerteeinheit (100) eine Simulation der Fluiddynamik durch zumindest ein Rohr (401, 402, 403, 404, 405) des Rohrnetzwerks (400) unter Berücksichtigung des Auswertedatensatzes umfasst.

8. System (1) nach einem der vorherigen Ansprüche, ferner umfassend:
zumindest einen Datenspeicher (500), der eingerichtet ist, den Auswertedatensatz und/oder die Messdaten zeitgestempelt abzuspeichern.

9. System (1) nach einem der vorherigen Ansprüche, ferner umfassend:
zumindest ein Nutzerendgerät (300) in kommunikativer Verbindung mit der Auswerteeinheit (100) und/oder dem zumindest einen Sensor (411, 412, 413), wobei
das Nutzerendgerät (300) eine grafische Benutzeroberfläche (301) umfasst und eingerichtet ist, eine grafische Darstellung des Auswertedatensatzes und/oder der Messdaten zu erzeugen und auf der grafischen Benutzeroberfläche (301) anzuzeigen, wobei
das Nutzerendgerät (300) ferner eine Nutzereingabeeinrichtung (302) umfasst, die eingerichtet ist, zumindest eine Nutzereingabe in Antwort auf das Anzeigen zu empfangen.

10. Brandschutzanlage umfassend ein System (1) gemäß einem der Ansprüche 1 bis 9.

11. Verfahren zum Überwachen eines Rohrnetzwerks (400) für eine Brandschutzanlage, umfassend:
Anordnen zumindest eines Sensors (411, 412, 413) an oder innerhalb zumindest eines Rohres (401, 402, 403, 404, 405) aus einer Vielzahl von Rohren (401, 402, 403, 404, 405) des Rohrnetzwerks (400), wobei der zumindest eine Sensor (411, 412, 413) mit einer Kommunikationseinrichtung (101) einer Auswerteeinheit (100) in kommunikativer Signalverbindung steht,
Zuordnen, durch die Auswerteeinheit (100), des zumindest einen Rohres (401, 402, 403, 404, 405) aus der Vielzahl von Rohren (401, 402, 403, 404, 405) basierend auf in der Auswerteeinheit abgelegten Eigenschaften des zumindest einen Rohres (401, 402, 403, 404, 405) zu einer bestimmten Rohrkategorie aus einer Vielzahl von Rohrkategorien,
Sammeln, durch den zumindest einen Sensor (411, 412, 413), von Messdaten, die indikativ sind für Veränderungen eines hydraulischen Zustands des zumindest einen Rohres (401, 402, 403, 404, 405),
Übermitteln, durch den zumindest einen Sensor (411, 412, 413), der Messdaten an die Kommunikationseinrichtung (101) der Auswerteeinheit (100),
Auswerten, durch die Auswerteeinheit (100), der Messdaten basierend auf dem Zuordnen des zumindest einen Rohres (401, 402, 403, 404, 405) zu der bestimmten Rohrkategorie und
Erzeugen, durch die Auswerteeinheit (100), eines Auswertedatensatzes, der indikativ für den hydraulischen Zustand des zumindest einen Rohres (401, 402, 403, 404, 405) ist; wobei das Verfahren weiterhin umfasst:
Zuordnen eines jeden Rohres (401, 402, 403, 404, 405) aus der Vielzahl von Rohren (401, 402, 403, 404, 405) des Rohrnetzwerks zu einer entsprechenden Rohrkategorie aus der Vielzahl von Rohrkategorien, wobei eine Anzahl von Rohrkategorien aus der Vielzahl von Rohrkategorien kleiner ist als eine Anzahl von Rohren (401, 402, 403, 404, 405) aus der Vielzahl von Rohren (401, 402, 403, 404, 405), wobei eine Vielzahl von Sensoren (411, 412, 413) an oder innerhalb einer Vielzahl von Rohren (401, 402, 403, 404, 405) angeordnet ist, wobei jeweils zumindest einem Rohr (401, 402, 403, 404, 405) einer entsprechenden Rohrkategorie aus der Vielzahl von Rohrkategorien ein Sensor (411, 412, 413) aus der Vielzahl von Sensoren (411, 412, 413) zugeordnet ist, und
Auswerten, durch die Auswerteeinheit (100), der Messdaten basierend auf dem Zuordnen jedes der Rohre (401, 402, 403, 404, 405) der Vielzahl von Rohren (401, 402, 403, 404, 405) zu der entsprechenden Rohrkategorie, um einen Auswertedatensatz zu erzeugen, der indikativ für den hydraulischen Zustand aller Rohre (401, 402, 403, 404, 405) der entsprechenden Rohrkategorie ist.

12. Verfahren nach Anspruch 11, weiterhin umfassend:
Empfangen einer Nutzeranfrage an der Auswerteeinheit (100) und/oder den Sensoren (411, 412, 413), und
Übermitteln, in Antwort auf die Nutzeranfrage, der Messdaten an ein Nutzerendgerät (300) zur Bereitstellung für den Nutzer.

13. Computerprogram mit Programmcodemitteln, die, wenn die sie auf einem Prozessor ausgeführt werden, den Prozessor veranlassen, das Verfahren gemäß einem der Ansprüche 11 und 12 auszuführen.

## Claims

1. A system (1) for monitoring a pipe network (400) for a fire protection system, comprising:
an evaluation unit (100) with a communication device (101), and
at least one sensor (411, 412, 413) arranged on or within at least one pipe (401, 402, 403, 404, 405) of a plurality of pipes (401, 402, 403, 404, 405) of the pipe network (400) and in communicative signal connection with the communication device (101), wherein
the evaluation unit (100) is configured to assign, based on properties of the at least one pipe (401, 402, 403, 404, 405), the at least one pipe (401, 402, 403, 404, 405) of the plurality of pipes (401, 402, 403, 404, 405) to a specific pipe category of a plurality of pipe categories,
wherein the at least one sensor (411, 412, 413) is configured to collect measurement data which are indicative of changes in a hydraulic state of the at least one pipe (401, 402, 403, 404, 405), and to transmit these measurement data to the communication device (101) of the evaluation unit (100), wherein
the evaluation unit (100) is configured to evaluate the measurement data based on the assigning of the at least one pipe (401,402, 403, 404, 405) to the specific pipe category to generate an evaluation data record indicative of the hydraulic condition of the at least one pipe (401, 402, 403, 404, 405),
wherein each pipe (401, 402, 403, 404, 405) of the plurality of pipes (401, 402, 403, 404, 405) of the pipe network is assigned to a corresponding pipe category of the plurality of pipe categories, wherein a number of pipe categories of the plurality of pipe categories is smaller than a number of pipes (401, 402, 403, 404, 405) of the plurality of pipes (401, 402, 403, 404, 405);
wherein a plurality of sensors (411, 412, 413) is arranged on or within a plurality of pipes (401, 402, 403, 404, 405), wherein a sensor (411, 412, 413) of the plurality of sensors (411, 412, 413) is assigned to at least one pipe (401, 402, 403, 404, 405) of a corresponding pipe category of the plurality of pipe categories, and
wherein the evaluation unit (100) is configured to evaluate the measurement data based on the assignment of each of the pipes (401, 402, 403, 404, 405) of the plurality of pipes (401, 402, 403, 404, 405) to the corresponding pipe category to generate an evaluation data record indicative of the hydraulic condition of all pipes (401, 402, 403, 404, 405) in the corresponding pipe category.

2. The system (1) according to claim 1, wherein the evaluation unit (100) comprises a classification device which performs an evaluation of the fire protection system based on training data records.

3. The system (1) according to one of the preceding claims, wherein the communication device (101) comprises an interface for wireless communication, and wherein the communicative signal connection between the at least one sensor (411, 412, 413) and the communication device (101) comprises a wireless signal connection.

4. The system (1) according to one of the preceding claims, wherein the at least one sensor (411, 412, 413) is configured to transmit the collected measurement data periodically at predetermined time intervals to the communication device (101) of the evaluation unit (100).

5. The system (1) according to one of the preceding claims, wherein the hydraulic condition of the at least one pipe (401, 402, 403, 404, 405) comprises a deposit level of deposits on an inner wall of the pipe (401, 402, 403, 404, 405), wherein the evaluation unit (100) is further configured
to determine an exceedance of a predefined threshold value for the deposit level, and
to output a deposit level in response to the determination.

6. The system (1) according to claim 5, further comprising a control unit (200) configured to initiate a removal action in response to the deposition indication.

7. The system (1) according to one of the preceding claims, wherein the evaluation of the measurement data by the evaluation unit (100) comprises a simulation of fluid dynamics through at least one pipe (401, 402, 403, 404, 405) of the pipe network (400), taking into account the evaluation data record.

8. The system (1) according to one of the preceding claims, further comprising:
at least one data memory (500) configured to store the evaluation data record and/or the measurement data in a time-stamped manner.

9. The system (1) according to one of the preceding claims, further comprising:
at least one user terminal (300) in communicative connection with the evaluation unit (100) and/or the at least one sensor (411, 412, 413), wherein
the user terminal (300) comprises a graphical user interface (301) and is configured to generate and display on the graphical user interface (301) a graphical representation of the evaluation data record and/or the measurement data, wherein
the user terminal (300) further comprises a user input device (302) configured to receive at least one user input in response to the displaying.

10. A fire protection system comprising a system (1) according to any one of claims 1 to 9.

11. A method for monitoring a pipe network (400) for a fire protection system, comprising:
arranging of at least one sensor (411, 412, 413) on or within at least one pipe (401, 402, 403, 404, 405) of a plurality of pipes (401, 402, 403, 404, 405) of the pipe network (400), wherein the at least one sensor (411, 412, 413) is in communicative signal connection with a communication device (101) of an evaluation unit (100),
assigning, by the evaluation unit (100), the at least one pipe (401, 402, 403, 404, 405) of the plurality of pipes (401, 402, 403, 404, 405) to a specific pipe category of a plurality of pipe categories, based on properties of the at least one pipe (401, 402, 403, 404, 405) stored in the evaluation unit,
collecting, by the at least one sensor (411, 412, 413), measurement data indicative of changes in the hydraulic condition of the at least one pipe (401, 402, 403, 404, 405),
transmitting, by the at least one sensor (411, 412, 413), the measurement data to the communication device (101) of the evaluation unit (100),
evaluating, by the evaluation unit (100), the measurement data based on the assigning of the at least one pipe (401, 402, 403, 404, 405) to the specific pipe category and
generating, by the evaluation unit (100), an evaluation data record indicative of the hydraulic condition of the at least one pipe (401, 402, 403, 404, 405); wherein the method further comprises:
assigning each pipe (401, 402, 403, 404, 405) of the plurality of pipes (401, 402, 403, 404, 405) of the pipe network to a corresponding pipe category of the plurality of pipe categories, wherein the number of pipe categories of the plurality of pipe categories is smaller than the number of pipes (401, 402, 403, 404, 405) of the plurality of pipes (401, 402, 403, 404, 405), wherein a plurality of sensors (411, 412, 413) is arranged on or within a plurality of pipes (401, 402, 403, 404, 405), wherein at least one sensor (411, 412, 413) of the plurality of sensors (411, 412, 413) is assigned to at least one pipe (401, 402, 403, 404, 405) of a corresponding pipe category of the plurality of pipe categories, and
evaluating, by the evaluation unit (100), the measurement data based on assigning each of the pipes (401, 402, 403, 404, 405) of the plurality of pipes (401, 402, 403, 404, 405) to the corresponding pipe category to generate an evaluation data record indicative of the hydraulic condition of all pipes (401, 402, 403, 404, 405) in the corresponding pipe category.

12. The method according to claim 11, further comprising:
receiving a user request at the evaluation unit (100) and/or the sensors (411, 412, 413), and
transmitting, in response to the user request, the measurement data to a user terminal (300) for provision to the user.

13. A computer program having program code means which, when executed on a processor, cause the processor to carry out the method according to one of claims 11 and 12.

## Revendications

1. Système (1) de surveillance d'un réseau de canalisations (400) pour une installation de protection contre les incendies, comprenant :
une unité d'évaluation (100) avec un dispositif de communication (101), et
au moins un capteur (411, 412, 413), qui est disposé sur ou à l'intérieur d'au moins un tuyau (401, 402, 403, 404, 405) à partir d'une pluralité de tuyaux (401, 402, 403, 404, 405) du réseau de canalisations (400) et est en liaison de signal de communication avec le dispositif de communication (101),
dans lequel l'unité d'évaluation (100) est mise au point pour associer au moins un tuyau (401, 402, 403, 404, 405) issu de la pluralité de tuyaux (401, 402, 403, 404, 405) sur la base de propriétés, stockées dans l'unité d'évaluation, de l'au moins un tuyau (401, 402, 403, 404, 405) à une catégorie de tuyaux donnée parmi une pluralité de catégories de tuyaux, dans lequel
l'au moins un capteur (411, 412, 413) est mis au point pour collecter des données de mesure, qui indiquent des modifications d'un état hydraulique de l'au moins un tuyau (401, 402, 403, 404, 405), et pour transmettre ces données de mesure au dispositif de communication (101) de l'unité d'évaluation (100), dans lequel
l'unité d'évaluation (100) est mise au point pour évaluer les données de mesure sur la base de l'association de l'au moins un tuyau (401, 402, 403, 404, 405) à la catégorie de tuyaux donnée, pour générer un jeu de données d'évaluation qui indique l'état hydraulique de l'au moins un tuyau (401, 402, 403, 404, 405) ;
dans lequel chaque tuyau (401, 402, 403, 404, 405) issu de la pluralité de tuyaux (401, 402, 403, 404, 405) du réseau de canalisations est associé à une catégorie de tuyaux correspondante parmi la pluralité de catégories de tuyaux, dans lequel un nombre de catégories de tuyaux parmi la pluralité de catégories de tuyaux est inférieur à un nombre de tuyaux (401, 402, 403, 404, 405) parmi la pluralité de tuyaux (401, 402, 403, 404, 405) ;
dans lequel une pluralité de capteurs (411, 412, 413) est disposée sur ou à l'intérieur d'une pluralité de tuyaux (401, 402, 403, 404, 405), dans lequel un capteur (411, 412, 413) issu de la pluralité de capteurs (411, 412, 413) est associé à respectivement au moins un tuyau (401, 402, 403, 404, 405) d'une catégorie de tuyaux correspondante parmi la pluralité de catégories de tuyaux, et
dans lequel l'unité d'évaluation (100) est mise au point pour évaluer les données de mesure sur la base de l'association de chacun des tuyaux (401, 402, 403, 404, 405) de la pluralité de tuyaux (401, 402, 403, 404, 405) à la catégorie de tuyaux correspondante, pour générer un jeu de données d'évaluation, qui indiquent l'état hydraulique de tous les tuyaux (401, 402, 403, 404, 405) de la catégorie de tuyau correspondante.

2. Système (1) selon la revendication 1, dans lequel l'unité d'évaluation (100) comprend un dispositif de classification qui exécute une appréciation de l'installation de protection contre les incendies sur la base de jeux de données d'entraînement.

3. Système (1) selon l'une quelconque des revendications précédentes, dans lequel le dispositif de communication (101) comprend une interface de communication sans fil, et dans lequel la liaison de signal de communication entre l'au moins un capteur (411, 412, 413) et le dispositif de communication (101) comprend une liaison de signal sans fil.

4. Système (1) selon l'une quelconque des revendications précédentes, dans lequel l'au moins un capteur (411, 412, 413) est mis au point pour transmettre périodiquement, à des intervalles de temps spécifiés, les données de mesure collectées au dispositif de communication (101) de l'unité d'évaluation (100).

5. Système (1) selon l'une quelconque des revendications précédentes, dans lequel l'état hydraulique de l'au moins un tuyau (401, 402, 403, 404, 405) comprend un degré de dépôt de dépôts sur une paroi intérieure du tuyau (401, 402, 403, 404, 405), dans lequel l'unité d'évaluation (100) est en outre mise au point
pour déterminer un dépassement d'une valeur limite prédéfinie pour le degré de dépôt, et
pour délivrer, en réponse à la détermination, une indication de dépôt.

6. Système (1) selon la revendication 5, comprenant en outre une unité de commande (200) qui est mise au point pour initier une action d'élimination en réponse à l'indication de dépôt.

7. Système (1) selon l'une quelconque des revendications précédentes, dans lequel l'évaluation des données de mesure par l'unité d'évaluation (100) comprend une simulation de la dynamique des fluides à travers au moins un tuyau (401, 402, 403, 404, 405) du réseau de canalisations (400) en tenant compte du jeu de données d'évaluation.

8. Système (1) selon l'une quelconque des revendications précédentes, comprenant en outre :
au moins une mémoire de données (500), qui est mise au point pour enregistrer le jeu de données d'évaluation et/ou les données de mesure avec un horodatage.

9. Système (1) selon l'une quelconque des revendications précédentes, comprenant en outre :
au moins un terminal utilisateur (300) en communication avec l'unité d'évaluation (100) et/ou l'au moins un capteur (411, 412, 413), dans lequel
le terminal utilisateur (300) comprend une interface utilisateur graphique (301) et est mis au point pour générer et afficher, sur l'interface utilisateur graphique (301), une représentation graphique du jeu de données d'évaluation et/ou des données de mesure, dans lequel
le terminal utilisateur (300) comprend en outre un dispositif d'entrée utilisateur (302), qui est mis au point pour recevoir au moins une entrée utilisateur en réponse à l'affichage.

10. Installation de protection contre les incendies comprenant un système (1) selon l'une quelconque des revendications 1 à 9.

11. Procédé de surveillance d'un réseau de canalisations (400) pour une installation de protection contre les incendies, comprenant :
la disposition d'au moins un capteur (411, 412, 413) sur ou à l'intérieur d'au moins un tuyau (401, 402, 403, 404, 405) issu d'une pluralité de tuyaux (401, 402, 403, 404, 405) du réseau de canalisations (400), dans lequel l'au moins un capteur (411, 412, 413) est en liaison de signal de communication avec un dispositif de communication (101) d'une unité d'évaluation (100),
l'association, par l'unité d'évaluation (100), de l'au moins un tuyau (401, 402, 403, 404, 405) issu de la pluralité de tuyaux (401, 402, 403, 404, 405) sur la base de propriétés stockées dans l'unité d'évaluation de l'au moins un tuyau (401, 402, 403, 404, 405) à une catégorie de tuyaux donnée parmi une pluralité de catégories de tuyaux,
la collecte par l'au moins un capteur (411, 412, 413) de données de mesure qui indiquent des modifications d'un état hydraulique de l'au moins un tuyau (401, 402, 403, 404, 405),
la transmission, par l'au moins un capteur (411, 412, 413), des données de mesure au dispositif de communication (101) de l'unité d'évaluation (100),
l'évaluation, par l'unité d'évaluation (100), des données de mesure sur la base de l'association de l'au moins un tuyau (401, 402, 403, 404, 405) à la catégorie de tuyaux donnée et
la génération, par l'unité d'évaluation (100), d'un jeu de données d'évaluation qui indique l'état hydraulique de l'au moins un tuyau (401, 402, 403, 404, 405) ; le procédé comprenant par ailleurs :
l'association de chaque tuyau (401, 402, 403, 404, 405) issu de la pluralité de tuyaux (401, 402, 403, 404, 405) du réseau de canalisations à une catégorie de tuyaux correspondante parmi la pluralité de catégories de tuyaux, dans lequel un nombre de catégories de tuyaux parmi la pluralité de catégories de tuyaux est inférieur à un nombre de tuyaux (401, 402, 403, 404, 405) parmi la pluralité de tuyaux (401, 402, 403, 404, 405), dans lequel une pluralité de capteurs (411, 412, 413) est disposée sur ou à l'intérieur d'une pluralité de tuyaux (401, 402, 403, 404, 405), dans lequel un capteur (411, 412, 413) issu de la pluralité de capteurs (411, 412, 413) est associé à respectivement au moins un tuyau (401, 402, 403, 404, 405) d'une catégorie de tuyaux correspondante parmi la pluralité de catégories de tuyaux, et
l'analyse, par l'unité d'évaluation (100), des données de mesure sur la base de l'association de chacun des tuyaux (401, 402, 403, 404, 405) de la pluralité de tuyaux (401, 402, 403, 404, 405) à la catégorie de tuyaux correspondante, pour générer un jeu de données d'évaluation, qui indique l'état hydraulique de tous les tuyaux (401, 402, 403, 404, 405) de la catégorie de tuyaux correspondante.

12. Procédé selon la revendication 11, comprenant par ailleurs :
la réception d'une demande d'utilisateur sur l'unité d'évaluation (100) et/ou les capteurs (411, 412, 413), et
la transmission, en réponse à la demande d'utilisateur, des données de mesure à un terminal utilisateur (300) pour mise à disposition à l'utilisateur.

13. Programme informatique avec des moyens de code de programme qui, lorsqu'ils sont exécutés sur un processeur, amènent le processeur à exécuter le procédé selon l'une quelconque des revendications 11 et 12.
